(19) Europäisches Patentamt
European Patent Office
Office européen des brevets

(11) **EP 4 098 983 B1**

(12) **EUROPEAN PATENT SPECIFICATION**

(45) Date of publication and mention
of the grant of the patent:
**04.10.2023 Bulletin 2023/40**

(51) International Patent Classification (IPC):
**G01H 1/00** *(2006.01)* **G01P 15/08** *(2006.01)*
**G01V 1/18** *(2006.01)* **G01P 15/03** *(2006.01)*

(21) Application number: **22175640.6**

(52) Cooperative Patent Classification (CPC):
**G01V 1/18; G01H 1/00; G01P 15/032**

(22) Date of filing: **26.05.2022**

(54) **TWO- OR THREE-DIMENSIONAL WATT'S LINKAGE AND THE IMPLEMENTATION IN A SEISMIC SENSOR**

ZWEI- ODER DREIDIMENSIONALES WATTGESTÄNGE UND DIE IMPLEMENTIERUNG IN EINEN SEISMISCHEN SENSOR

MÉCANISME DE WATT BIDIMENSIONNEL OU TRIDIMENSIONNEL ET LA IMPLÉMENTATION DANS UN CAPTEUR SISMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.06.2021 IT 202100014417**

(43) Date of publication of application:
**07.12.2022 Bulletin 2022/49**

(73) Proprietor: **Advanced Scientific Sensors and Systems S.r.l.**
**84081 Baronissi (SA) (IT)**

(72) Inventors:
• **BARONE, Fabrizio**
**84081 Baronissi (SA) (IT)**

• **ROMANO, Rocco**
**84081 Baronissi (SA) (IT)**

(74) Representative: **Perronace, Andrea et al**
**Jacobacci & Partners S.p.A.**
**Via Tomacelli, 146**
**00186 Roma (IT)**

(56) References cited:
**DE-A1- 3 428 159 US-B2- 8 608 234**

• **BARONE FABRIZIO ET AL: "The UNISA folded pendulum: A very versatile class of low frequency high sensitive sensors", MEASUREMENT, vol. 118, 2 September 2017 (2017-09-02), pages 339-347, XP085367872, ISSN: 0263-2241, DOI: 10.1016/J.MEASUREMENT.2017.09.001**

EP 4 098 983 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention is about a mechanism aimed at the implementation of multidimensional mechanical systems for scientific, civil and industrial applications, including, for example, seismic isolation systems, inertial platforms and broadband low frequency displacement, velocity and acceleration sensors.

## Prior art

The so-called Watt's Linkage (also known as "Parallel Linkage" or in Italian "parallelogramma di Watt"), invented by James Watt in 1774 [1], is a well-known mechanism, as well as its special configuration, internationally known as Folded Pendulum [2], widely used for the implementation of both seismic damping systems and broadband low frequency seismic sensors.

It also well known that the scientific and technological limitations of systems and instruments based on the folded pendulum architecture directly descend from the Watt's Linkage ones, being the latter, by definition, a mechanism whose dynamics is constrained to a plane. This property allows the implementation of highly directional (one-dimensional) instruments, but at the same time represents an important limitation: it is not possible the implementation of *'native'* two-dimensional or three-dimensional systems, but only of systems consisting of one-dimensional independent ones, positioned close to each other and oriented along orthogonal directions, as widely highlighted in the literature [3, 4, 5, 6].

It is therefore evident that a direct extension of the Watt's Linkage in more dimensions, still keeping its relevant one-dimensional features unchanged, is a relevant technological challenge.

This extension, so far never hypothesized and/or implemented, would also allow a direct extension to the two-dimensional and/or three-dimensional case of the Folded Pendulum configuration, with clear advantages in many scientific and technological fields [7, 8, 9].

For example, an implementation of two-dimensional and/or three-dimensional *'native'* systems would be possible, among which we cite, as an example only, both systems for passive and/or active damping (seismic attenuators, inertial platforms, etc.) and, in complementary mode, systems for measuring displacements, velocities and accelerations (seismic sensors).

Furthermore, taking also into account the possibility of implementations of modular mechanical versions of the mechanism (be it Watt's Linkage, Folded Pendulum or other), it would be possible to think also to further improvements of the mechanical characteristics and performances of the classic systems, including compactness (size of the whole system).

Coming now to the more specific case of design and implementation of inertial platforms and/or seismic isolation systems (seismic attenuators) for civil, industrial and scientific applications, the implementation of a wide band ($10^{-3}$ Hz - $10^2$ Hz) at low frequency (< 0.1 Hz) system is a scientifically and technologically open problem, certainly of interdisciplinary interest.

In the civil field, for example, research and development are largely focused on reducing the effects due to seismic forcing, which could give rise to structural resonance phenomena with consequent damage of structures (e.g. buildings, bridges, dams, etc.) [10, 11].

Furthermore, the present research and development activity aimed at the design and implementation of attenuation systems and/or inertial platforms has as objective the decoupling of the activity carried out on it (experiments or measurements) from the local seismic noise (micro-earthquakes) and from anthropogenic noise, always present even in absence of earthquakes, allowing experiments, measurements and laboratory activities to be carried out on the earth's surface in better experimental conditions [12].

In summary, the main purpose of these mechanisms is the decoupling or at least the reduction of the effects produced by external mechanical forcing on mechanical systems, regardless of the application for which they are designed.

The same mechanisms can also be analyzed from a different perspective. In fact, taking into account that an inertial platform has a dynamic behavior identical to that of an inertial mass (within a well-defined band determined by the mechanical architecture of the whole system), it is possible to think of its use as a sensor for an absolute measurement of the motion of the surface to which the same structure is anchored (site) in the band in question [13, 14].

In this regard, however, it is important to underline that, although different methodologies and techniques developed for the implementation of broadband seismic sensors in the frequency band > 0.1 Hz (e.g. MEMS [15]) are known, it is at the same time known that the design and implementation of such wide band sensors (resonance frequencies < 0.1 Hz) is very difficult by simply refining and improving known methodologies and techniques, as presently done in international research and development.

In summary, the design and construction of seismic attenuators (and/or inertial platforms) and seismic sensors in the low frequency region (< 0.1 Hz) with a wide band and high sensitivity is currently an open scientific and technological problem, in which considerable resources are being invested in terms of research and development.

Obviously, the design and implementation of seismic attenuators (and/or inertial platforms) and seismic sensors in regions that include the low frequency band, but that are not limited to it, would also be appreciable.

In detail, the classification of the current attenuation systems (isolators) is currently carried out on the basis of three distinct categories, which can also be used in a complete and non-exclusive way in the same structure:

- **Elastomeric isolators:** they use high vertical stiffness and low horizontal stiffness of the design to bring the period of the structure to be isolated out of the forcing frequency band (e.g. earthquakes);
- **Rolling metal isolators:** they use the low rolling friction value for the isolation even of light and flexible structures;
- **Sliding isolators:** they limit the total horizontal forcing of the structure to a predetermined (very low) value (e.g. horizontal component of the forcing due to an earthquake).

The latter category includes simple, double, triple pendulum isolators, in general multistage, such as the highly performing ones (super-attenuators), international state-of-the-art, used for low frequency seismic attenuation in interferometric gravitational wave detectors [16, 17, 18].

These systems demonstrate, on the basis of an in-depth analysis of the scientific literature, of the achievements carried out so far and of the publications in international literature, that the problem of the implementation of two-dimensional and three-dimensional wide-band low and very low frequency pendular multistage seismic damping systems (< 10 mHz) is still unsolved.

This is mainly due to the fact that it is very difficult to implement inertial masses (and therefore platforms) effective in this frequency band if not assuming large structures, very expensive and not very manageable from the control point of view, as demonstrated by the equations that describe the motion of these pendular systems [16, 17, 18]. Studies and researches aimed at identifying innovative mechanical structures have shown that it is possible to implement *"one-dimensional"* inertial masses at the above frequencies, but in principle also of lower orders of magnitude, even with much more compact mechanical systems, using more complex architectures than the simple or inverse pendulum [3, 4, 5, 6, 7, 8, 9].

The seismic isolators (attenuators) based, as mentioned above, on the classic Watt's linkage, made in the aforementioned particular configuration of the Folded Pendulum, can be framed within these architectures. Schematically, the structure to be isolated is the inertial mass of the pendulum itself, which above the pendular resonance frequency tends to behave as a real inertial mass, *"decoupled"* from all the external forces acting on the point of application of the pendulum in the frequency band above its resonant frequency.

Examples of applications of this architecture are present and well described in the literature both as seismic isolators [12] and as uniaxial seismic sensors [3, 4, 5, 7, 8, 9, 13, 14], the latter characterized by high sensitivity and very large low frequency band, due to the very low resonance frequencies that this very compact architecture allows to obtain.

However, it should be emphasized that, despite the quality and technical possibilities offered in terms of resonance frequencies, and, therefore, of bandwidth useful for damping and/or measurement, the Folded Pendulum remains a one-dimensional mechanism. In fact, being based on the Watt's Linkage, it allows mechanical attenuation only in one direction, defined by the mechanism itself. At present, no extensions or developments have been made in the literature and/or planned or implementations allowing its direct application in several dimensions. This is highlighted by the fact that all the extensions hypothesized and/or implemented in several dimensions require several independent sensors positioned closed to each other, one for each degree of freedom [7, 8, 9]. On the other hand, as regards the applications of the Folded Pendulum as a seismic attenuator and/or inertial platform, no two-dimensional and/or three-dimensional (single and/or multistage) system has ever been created and/or hypothesized.

It is therefore evident that, in order to be able to make that technological leap that allows the implementation of two-dimensional and/or three-dimensional *"native"* isolators and sensors, it is first of all necessary to extend the classic mechanism of Watt's Linkage to the two-dimensional and/or three-dimensional case, and then to extend the results to the folded pendulum and its applications, for example, as a sensor.

**Object and subject-matter of the invention**

The present invention aims to provide a multidimensional Watt's Linkage, also in folded pendulum configuration, as well as seismic sensors, which, in whole or in part, solve the problems and overcome the drawbacks of the known art.

The main object of the present invention is a mechanical multidimensional Watt's Linkage, a folded pendulum, as well as a seismic sensor, according to the attached claims.

**Detailed description of embodiments of the invention**

**List of figures**

The invention will now be described for illustrative but not limitative purposes, with particular reference to the drawings of the attached figures, in which:

- Fig. 1 shows the so-called Watt's Linkage, according to the known technique;
- Fig. 2 shows a so-called folded pendulum, particular case of the configuration of Fig. 1, according to the known technique;
- Fig. 3 shows a generalized folded pendulum model (GFPM), according to the known technique;
- Fig. 4 shows a diagram of a two-dimensional Watt's linkage, according to the invention;
- Fig. 5 shows a diagram of a two-dimensional folded pendulum according to an embodiment in accordance with the present invention;
- Fig. 6 shows a diagram of a three-dimensional folded pendulum according to an embodiment in accordance with the present invention;
- Fig. 7 shows a scheme of principle of an inertial platform based on a folded pendulum, in particular in (a) as an ideal case, in (b) as a quasi-ideal case, and in (c) as an effective realistic case;
- Fig. 8 shows a basic stage of a natively inertial two-dimensional platform, according to an aspect of the invention;
- Fig. 9 shows in (a) a classic folded pendulum, in (b) an effective compact folded pendulum, and in (c) a compact folded pendulum (monolithic), according to the known technique;
- Fig. 10 shows a basic stage of a natively inertial compact two-dimensional platform, according to an embodiment of the invention;
- Fig. 11 shows one of the possible application schemes of the invention for the construction of anti-seismic buildings aimed at the safety of the population;
- Fig. 12 shows one of the possible application schemes of the invention to the implementation of inertial platforms applicable to structures in motion (ambulances, in the example) for carrying out operations that require stable support structures (surgical operations in ambulances, for example);
- Fig. 13 shows an embodiment of two folded pendulums applied to a car axle, according to an embodiment of the invention.

It is specified here that elements of different embodiments can be combined together to provide further unlimited embodiments, as the average person skilled in the art understands without problems from what has been described. The scope of the invention is defined by the appended claims.

The present description also refers to the known art for its implementation, with regard to the detailed characteristics not described, such as for example less important elements usually used in the known art in solutions of the same type.

When an element is introduced, it always means that it can be "at least one" or "one or more".

When a list of elements or characteristics is listed in this description, it means that the found according to the invention "includes" or alternatively "is composed of" such elements.

Two or more of the parts (elements, devices, systems) described according to the invention can be freely associated and considered as a kit of parts according to the invention.

**Embodiments**

**Description and properties of the Watt's Linkage**

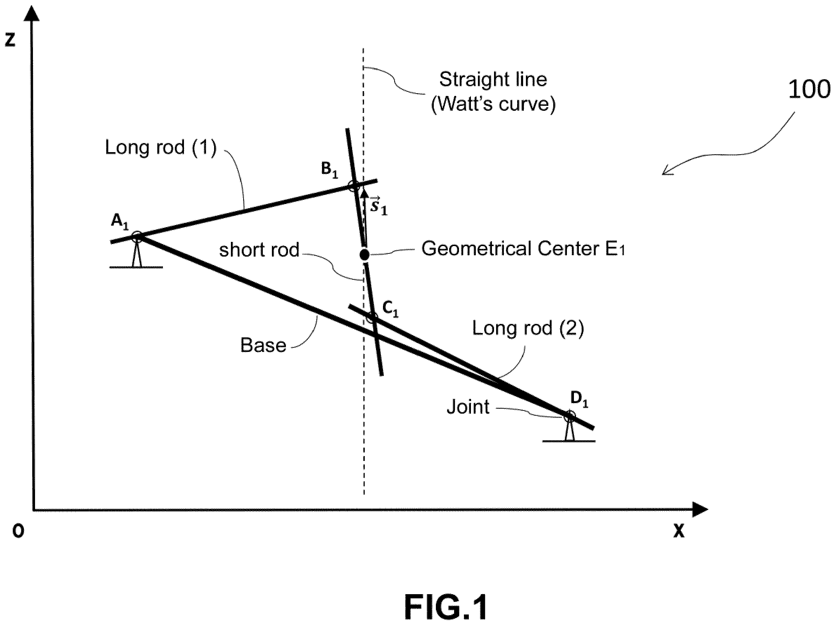

The Watt's Linkage is a mechanism invented by James Watt in 1784, also known in literature as Parallel Linkage, characterized by significant physical and geometric properties (Fig. 1) [1, 2].

The original mechanism consists of three rods: a central rod and two external rods of equal length, the latter connected by means of rotation joints both to the central rod and to external fixed points (base), a configuration that allows its classification also as kinematics [1, 2, 7, 8, 9].

The rotation joints, all lying on the same plane and characterized by mutually parallel and perpendicular rotation axes to this plane, constrain the whole mechanism to move on it. This leads to the definition of a fundamental geometric property of Watt's Linkage: the geometric center of the central rod is constrained to trace a lemniscate, which becomes a lemniscate of Bernoulli if the lengths of the rods and its base are chosen in such a way as to form a crossed square [19]. In particular, for small displacements of the central rod, this curve, also known as Watt curve, can be approximated by a straight line (as described in Watt's patent specification for the steam engine [3]), approximation more and more true the greater the length of the two external rods with respect to the central rod (Fig. 1).

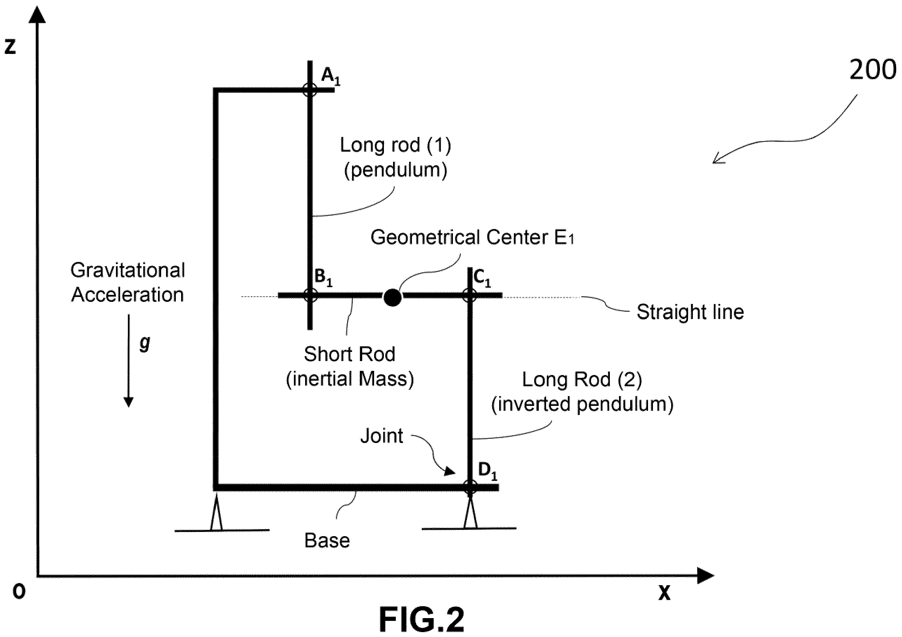

Therefore, the motion of the geometric center of the central rod is a motion approximated by a straight line, therefore a one-dimensional motion, a fundamental characteristic of Watt's Linkage, which is used very effectively in a particular configuration, called Folded Pendulum, hypothesized for first time by Ferguson in 1962 [2]. In fact, this configuration expresses the original idea of positioning the rods in such a way that the direction of the gravitational acceleration vector, g, is parallel to the longitudinal axes of the long rods and perpendicular to that of the central rod (configuration at rest), which can be interpreted physically as a combination of a simple pendulum and of an inverted pendulum (long rods), connected to the central rod (inertial mass) and to an external supporting structure (frame) (Fig. 2). The dynamic behavior of this particular configuration of Watt's Linkage is equivalent to that of a horizontal mechanical oscillator with remarkable physical and geometric properties [7, 8, 9], which has allowed the design of mechanical seismometers and accelerometers [3-9, 12, 14], mechanical seismic attenuators [12] and innovative tilt meters [9, 20].

Although this architecture appears in principle very simple, actually the analytical models developed for its description are very complex, so that numerical techniques based on finite element analysis (FEA) are generally preferred for its description, since they provide very accurate and effective descriptions of the dynamic behavior of the mechanism for any configuration. On the other hand, simplified analytical solutions provide, instead, a global and synthetic view of the mechanical performance and dynamic behavior of many implementations, in many cases truly effective, so that, if the mechanical configuration allows it, they are always desirable and preferable.

These considerations have led the efforts made in the direction of the development and testing of analytical models, summarized in the Extended Folded Pendulum Model (EFPM), which analytically describes in a simplified, albeit effective and reliable way, the dynamic behavior of a Folded Pendulum generally oriented in the space, considering the pendulums and the central mass as two-dimensional bars and rotational joints [9].

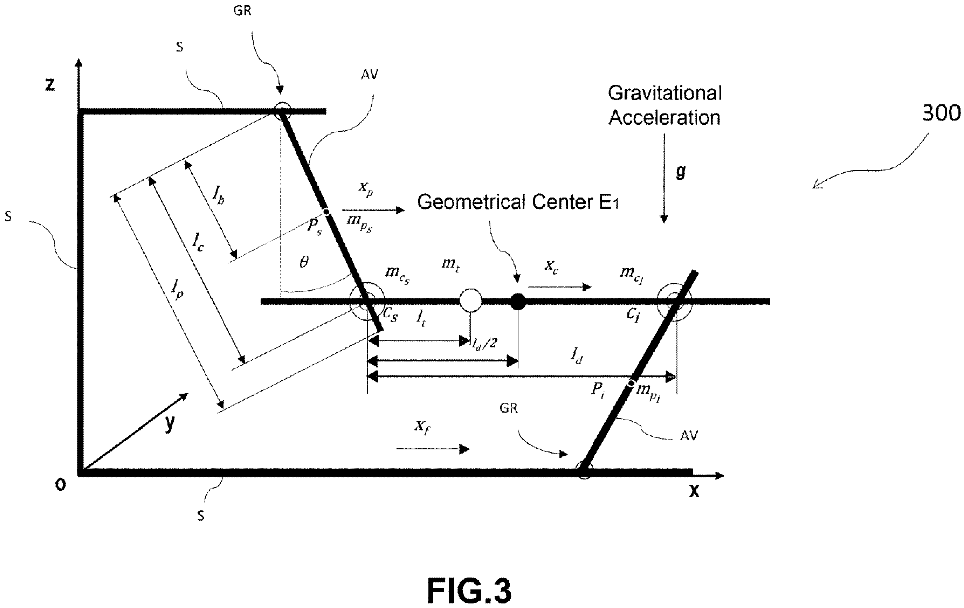

Below are some key elements of the Extended Folded Pendulum Model, specialized, for the only purpose of describing this invention, but without any limitation of principle, to the description of a horizontal Folded Pendulum, with the aim of underlining some of the folded pendulum physical and geometric properties, useful to understand the present invention (Fig. 3). In fact, the Lagrangian model EFPM [9] (and its simplified version GFPM [7, 8]) allows us to write in a simple way the transfer functions that describe the dynamics of the motion of the central mass (inertial mass) with respect to the motion of the support and, consequently, the relative motion of the central mass with respect to the surface to which the Folded Pendulum is anchored in its applications.

In this brief and concise description, the independence of the trajectory described by the geometric center of the central rod from the resonant frequency of the Folded Pendulum will be highlighted, as well as the possibility of changing the latter by means of suitable physic and geometric measures and actions. For further information, please refer to the specific literature [3, 4, 5, 7, 8, 9]. Here, it is however important to underline, and it will be done in the description of the model, that, in principle, but only in principle, it is possible to decrease the resonance frequency of the Folded Pendulum even to zero, obtaining in this way an ideal inertial mass.

Fig. 3 shows the Folded Pendulum 300 positioned in the xz reference system, the latter oriented with the z axis parallel to the gravitational acceleration vector, g, and with the x axis perpendicular to it. The Folded Pendulum schematized (according to the EFPM model [9]) consists of two vertical rods AV of equal length, $l_p$, both connected at one end to a support S by means of two rotation joints GR, thus implementing a simple pendulum of mass $m_{p_s}$ and an inverse pendulum of mass $m_{p_i}$. The masses of the two pendulums are concentrated in their centers of mass, $P_s$ and $P_i$, respectively, in $l_b = l_p/2$. The other two sides of the rods are connected to a horizontal rod, by means of two rotation joints ($C_s$ and $C_i$) positioned at a relative distance $l_d$. All four rotation joints are characterized by mutually parallel and perpendicular rotation axes to the xz plane, so that the whole motion of the Folded Pendulum is constrained in this xz plane. These joints can be elastic joints (in compression and/or in traction of any shape and material, even pre-flexed), which are widely used in the monolithic configurations of Folded Pendulums and well modeled by the Tseytilin formula [21]. The mass of the central rod of the Folded Pendulum, $m_c$, is modeled by means of two equivalent masses, $m_{c_s}$ and $m_{c_i}$ (dividing the mass of the central rod on the two arms, as described below), with the condition that

$$m_c = m_{c_s} + m_{c_i}. \qquad (1)$$

It should also be taken into account that the resonance frequency of the Folded Pendulum can be changed by introducing an external mass (calibration mass), $m_t$, positioned at a distance, $l_t$, from the center of rotation of the central rod, $C_s$.

It is therefore convenient to define the global mass of the central rod, $m_g$, as

$$m_g = m_c + m_t \qquad (2)$$

This mass can be divided into two equivalent masses, $m_{g_s}$ e $m_{g_i}$, positioned respectively at the points $C_s$ and $C_i$ as,

$$m_{g_s} = m_{c_s} + m_{t_s} = m_c \left(1 - \frac{l_m}{l_d}\right) + m_t \left(1 - \frac{l_t}{l_d}\right) \qquad (3)$$

$$m_{g_i} = m_{c_i} + m_{t_i} = m_c \left(\frac{l_m}{l_d}\right) + m_t \left(\frac{l_t}{l_d}\right) \qquad (4)$$

so that the global mass can be redefined as

$$m_g = m_{g_s} + m_{g_i} \qquad (5)$$

These equations show that any displacement of the calibration mass, $\Delta l_t$, changes the values of the two equivalent masses, $m_{g_s}$ e $m_{g_i}$, of the quantity

$$\Delta m_{g_s} = -\Delta m_{g_i} = -\frac{m_t}{l_d}\Delta l_t. \qquad (6)$$

Therefore, for small angles of deflection, $\theta$, the dynamic behavior of the system is described by a resonant system of the second order (with two complex conjugated poles) with a resonance frequency, $f_o$, equal to [7, 8, 9]

$$f_o = \frac{\omega_o}{2\pi} = \frac{1}{2\pi}\sqrt{\frac{K_{g_{eq}} + K_{e_{eq}}}{M_{eq}}} = \frac{1}{2\pi}\sqrt{\frac{K_{eq}}{M_{eq}}} \qquad (7)$$

where $K_{g_{eq}}$ is the gravitational equivalent elastic constant, linked to the geometric and inertial characteristics of the system and $K_{e_{eq}}$ is the equivalent elastic constant linked to the shape and mechanical characteristics of the suspension joints, defined, respectively, as

$$K_{g_{eq}} = \left[(m_{p_s} - m_{p_i})\frac{l_p}{2l_c} + (m_{g_s} - m_{g_i})\right]\frac{g}{l_c} \qquad (8)$$

$$K_{e_{eq}} = \frac{k_\theta}{l_p^2} \qquad (9)$$

where $k_\theta$ is the global torsional elastic constant of the joints, sum of the elastic constants of all the joints [9], while, $M_{eq}$, is the equivalent mass, defined as

$$M_{eq} = (m_{p_s} + m_{p_i})\frac{l_p^2}{3l_c^2} + (m_{g_s} + m_{g_i}) = (m_{p_s} + m_{p_i})\frac{l_p^2}{3l_c^2} + m_g \qquad (10)$$

Equation (7) is the classic expression of the resonance frequency of a mass-spring oscillator with an equivalent elastic constant equal to $K_{eq}$ and mass $M_{eq}$. A unique feature of the Folded Pendulum is the possibility of implementing mechanical oscillators with a low resonance frequency by compensating for the equivalent elastic constant, $K_{e_{eq}}$, determined by the material and geometry of the joints themselves, with negative values of the global gravitational elastic constant, $K_{g_{eq}}$, which can be obtained by means of a suitable combination. of the physical and geometric parameters of the Folded Pendulum.

This peculiarity of the Folded Pendulum allows with relative ease, as demonstrated in the international scientific literature, the design and construction, even monolithic, of mechanical oscillators (Folded Pendulum) characterized by very low resonance frequencies, which are variable and can be optimized according to the specific application, also by means of suitable calibration masses [7, 8, 9], useful for the implementation of both precision mechanical sensors (seismometers, velocimeters, accelerometers and tilt meters) and mechanical attenuation systems (seismic attenuation systems, inertial platforms, etc.).

As regards the use of this mechanical oscillator as a constituent element of a mechanical sensor, it is possible to analytically define its transfer function. In fact, by defining the coordinate of the support as $x_f(t)$, imposing that the mechanical support is fixed to the ground ($x_f(t) = x_g(t)$) and defining the coordinate of $E_1$, geometric center of the central rod (of length $l_d$ and mass $m_c$), as $x_c(t)$ (the difference $x_c(t)$ - $x_g(t)$ being measurable), the transfer function of the mechanical oscillator that describes the displacement of this mass with respect to the displacement of the ground in the Laplace domain can be approximated to [7, 8, 9]

$$H_{sensor}(s) = \frac{X_c(s) - X_g(s)}{X_g(s)} = -\frac{(1-A_c)s^2}{s^2 + \frac{\omega_o}{Q(\omega_o)}s + \omega_o^2} \qquad (11)$$

where $Q(\omega_o)$ is the global quality coefficient [7, 8, 9] and

$$A_c = \frac{\left(\frac{l_p}{3l_c} - \frac{1}{2}\right)\left(m_{ps} - m_{p_i}\right)}{M_{eq}} \qquad (12)$$

is the parameter relating to the effects of the center of percussion [9]. In the Fourier domain the equation (12) can, therefore, be rewritten very simply as

$$H_{sensor}(\omega) = \frac{X_c(\omega) - X_g(\omega)}{X_g(\omega)} = \frac{(1-A_c)\omega^2}{-\omega^2 + \frac{\omega_o}{Q(\omega_o)}j\omega + \omega_o^2} \qquad (13)$$

A quick analysis of the transfer function (11) shows that the behavior of the central mass is very close to that of an inertial mass for frequencies higher than the mechanical resonance frequency, $f_o$. Below this frequency, however, the behavior of the central mass deviates more and more from that of an inertial mass as the frequency decreases, according to a trend typically described by a classic second order system.

As regards the use of this mechanical oscillator as a constituent element of a mechanical attenuator, the transfer function is defined differently.

In this case, in fact, the goal is to minimize the motion of the central rod and, therefore, of its geometric center, $E_1$, always with the condition that the mechanical support is fixed with respect to the ground ($x_f(t) = x_g(t)$). Therefore, by rearranging Equation (11), it is possible to obtain the transfer function of the mechanical oscillator (attenuator) which describes the dynamic behavior of the central mass with respect to the displacement of the ground in the Laplace domain [7, 8, 9]:

$$H_{attenuator}(s) = \frac{X_c(s)}{X_g(s)} = \frac{A_c s^2 + \frac{\omega_o}{Q(\omega_o)}s + \omega_o^2}{s^2 + \frac{\omega_o}{Q(\omega_o)}s + \omega_o^2} \qquad (14)$$

The modeling and prototyping of mechanical oscillators of the Folded Pendulum type aimed at applications such as attenuators (for example, of seismic noise), also present in the literature [12], show that a suitable design of the mechanical oscillator allows the implementation of very high-quality attenuation. For example, but only in order to make the potential of the Folded Pendulum used as an attenuator more understandable and evident, we report, as an example, a limiting case of the transfer function of the mechanical oscillator described by Equation (14), for which it has been assumed that the parameter relating to the effects of the center of percussion tends to very small values, ($A_c = 0$), and the global quality coefficient of the mechanical oscillator, $Q$, tends to very large values ($Q = +\infty$). With these assumptions, the *"limit"* transfer function becomes

$$H_{attenuator}(s) = \frac{X_c(s)}{X_g(s)} = \frac{\omega_o^2}{s^2 + \omega_o^2} \qquad (15)$$

typical of a pure second order system. Equation (15) highlights in a simple and direct way the application potential of the Folded Pendulum also as an attenuator and/or inertial platform (low residual motion due to support forcing) in the frequency band above the resonance frequency, which can also be calibrated at very low frequency values, given the peculiarities of the Folded Pendulum itself [5, 8, 9, 12].

It follows that, for both types of application of this mechanism, the performance improves in any case as the resonance frequency decreases. To this end, different methodologies and procedures have been developed and are present in the literature aimed at the implementation and calibration of Watt's Linkages in general [9], and of Folded Pendulum for particular applications [7, 8], even at very low frequencies and with monolithic implementations, performances obtainable with design and implementations aimed at optimizing the physical and geometric characteristics of this mechanism.

Although, however, the development of design and construction solutions aimed at the implementation of mechanical architectures based on Watt's Linkage effective for one-dimensional attenuation is very advanced, actually it completely lacks of any possible prediction and/or future vision of a system based on Watt's Linkage, which operates *natively* in all three dimensions. In fact, a *"native"* Watt's Linkage that can operate in more dimensions does not exist, nor has it ever been hypothesized. This is also evident from the literature which does not foresee any hypothesis of extending this system to the two-dimensional and/or three-dimensional case, neither in general as a mechanism nor in particular as an attenuator (and/or inertial platform) and/or as a sensor.

As previously anticipated, it is possible, in fact, to find in the literature only two-dimensional and three-dimensional sensors obtained, however, as the "algebraic" sum of several independent sensors appropriately positioned [7, 8, 9], while for what concerns the attenuators (and/or platforms inertial) so far only one-dimensional systems have been developed [12, 13].

In order, therefore, to obtain both single-stage and multistage *"native"* attenuation systems, also characterized by a compactness that makes their physical implementation possible and its possible use not only in the scientific field, but also in the industrial and civil fields, it is necessary a direct extension of the Folded Pendulum, and, even before, of the Watt's Linkage, to the two-dimensional and three-dimensional case. This extension, so far never hypothesized, designed and/or implemented, may also be conveniently used for the design of innovative two-dimensional and three-dimensional *"native"* systems, characterized by modular stages applicable to the implementation of multistage attenuation systems and multistage sensors, compact, light, low-cost and with superior performances with respect to the ones of the mechanisms and systems currently implemented.

## Working principle of the Invention

### Extension of the Watt's Linkage to multiple dimensions

To extend the Watt's Linkage initially to the two-dimensional case, it is first of all necessary to reinterpret it, taking up and evaluating its fundamental aspects and properties.

Starting from the description of Watt's Linkage made in the previous section, we will first of all reframe the mechanical architecture of Watt's Linkage in a modular way, so as to be able to develop it both geometrically and physically, first extending it to the two-dimensional/three-dimensional case and, after that, also to the general multistage version.

The original mechanism 100, described in Fig. 1, consists of three rods (in solid black), all lying in a single plane: a central rod, $\overline{B_1C_1}$, and two external rods of equal length, $\overline{A_1B_1}$ e $\overline{C_1D_1}$, the latter connected by means of rotation joints (indicated with circles) both at the central rod and at external points, $A_1$ and $D_1$, fixed in the reference system *xyz*. The rotation joints, characterized by mutually parallel and perpendicular rotation axes to the plane of the mechanism $A_1B_1C_1D_1$ (positioned, without any loss of generality, parallel to the *xz* plane in the xyz reference), constrain the motion of the whole mechanism in this plane. These joints can be simple rotational joints but also elastic joints, for example elliptical and/or circular, a geometric configuration which is also very used in the monolithic implementations of Folded Pendulum and well modeled by the Tseytilin formula [21]. It is important to underline that the points $A_1$ e $D_1$ are fixed points in the reference system xz, so that they can be geometrically interpreted as ends of a virtual segment of fixed length and position, $\overline{A_1D_1}$, base of the Watt's Linkage, however fully equivalent and replaceable, also for implementation purposes, from a real segment, $\overline{A_1D_1}$, of identical length and fixed in the reference system *xyz*.

This mechanical architecture has the important property that the geometric center of the central rod, $E_1$, is constrained to trace a lemniscate (Watt's curve [1, 2]). The latter is with an excellent approximation a straight line (dashed in the figure) for small displacements (one-dimensional motion), an approximation the truer the greater the ratio between the length of the two external rods and the central rod.

In order to proceed with the description of the innovative extension of the Watt's Linkage to the two-dimensional/three-dimensional case, and then to specialize it in the case of the Folded Pendulum, it is important to underline four properties relevant to the purpose:

a) The segment $\overline{A_1D_1}$ (base) can be of any shape, however defined and positioned, provided that its ends, $A_1$ and $D_1$, are fixed in a spatial coordinate system chosen as reference, *xyz*.

b) The motion of each of the rods that constitute the Watt's Linkage is constrained to take place in the fixed plane, $A_1B_1C_1D_1$, as the axes of the centers of rotation are parallel to each other and perpendicular to the plane identified by the ends of the rods.

c) For small displacements, the geometric center, $E_1$ of the rod $\overline{B_1C_1}$ is constrained to move on a straight line (one-dimensional motion), lying by construction in the fixed plane, $A_1B_1C_1D_1$. Therefore, any point of any rigid body rigidly constrained and integral with point $E_1$ will be constrained to move unidimensionally along a parallel straight trajectory, with displacements identical to those carried out by point $E_1$.

d) It is always possible to measure the relative displacement of $E_1$ with respect to any fixed point of the base $\overline{A_1D_1}$.

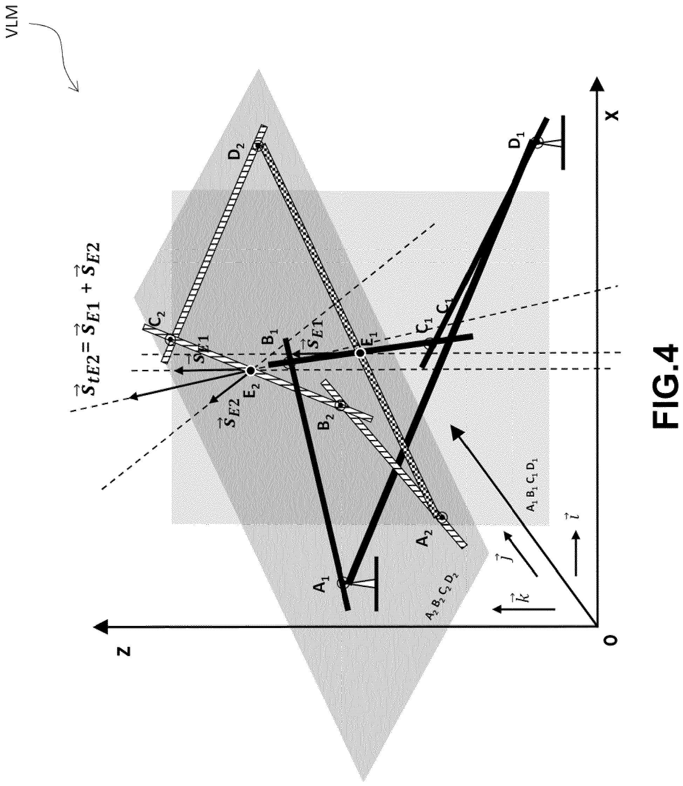

Referring to Fig. 4, and taking into account the properties highlighted above, we introduce a second Watt's Linkage, not necessarily identical, also consisting of three rods (indicated with lines with texture): a central rod, $B_2C_2$ and two external rods of equal length, $\overline{A_2B_2}$ and $\overline{C_2D_2}$, the latter connected by means of rotation joints (indicated with circles including a solid dot) to both the central rod and the base, $\overline{A_2D_2}$. Also in this case, the rotation joints are characterized by mutually parallel and perpendicular rotation axes to the plane determined by $A_2B_2C_2D_2$, the plane in which the motion of the mechanism itself takes place.

We make this second Watt's Linkage integral to the first, rigidly connecting a point of the base, $A_2D_2$, of the second linkage to the point $E_1$ of the first linkage, with the condition that the plane $A_2B_2C_2D_2$ is not coincident or parallel to the plane $A_1B_1C_1D_1$, and, therefore, is oriented in an independent direction.

It is here to specify (valid for the whole description) that when we say that a point of an element is integral to a point of another element, it means that the two elements are made integral by any means of rigid fastening of one element to the other, which acts on one point, on several points or on a more or less extensive area. It is understood that the resulting motion of the two elements is integral. Various examples of such rigid connection will be specified below, which may have specific technical advantages. By construction, therefore, the whole plane $A_2B_2C_2D_2$ on which the dynamics of the second Watt's Linkage takes place is constrained to move in a direction parallel to the motion of the point $E_1$, with motion described by displacement, $\vec{s}_{E_1}$, velocity, $\vec{v}_{E_1}$, and acceleration, $\vec{a}_{E_1}$, vectors.

The motion of each single point belonging to the rods constituting the second Watt's Linkage, including the point $E_2$ of the short rod $\overline{B_2C_2}$, will be characterized by construction by two components, one along the direction of motion identified by $E_1$ in the plane $A_1B_1C_1D_1$ and the other one along directions lying in the plane $A_2B_2C_2D_2$.

The component of the motion of the point $E_2$ along the direction of motion identified by $E_1$ in the plane $A_1B_1C_1D_1$ is represented by construction by the displacement, $\vec{s}_{E_1}$, velocity, $\vec{v}_{E_1}$, and acceleration, $\vec{a}_{E_1}$, vectors.

The component of motion of the different points constituting the second Watt's Linkage is represented by displacement, velocity and acceleration vectors lying by construction in the plane $A_2B_2C_2D_2$, which, in general, have variable orientations according to the different possible spatial configurations. In particular, however, the point $E_2$ move along a constant linear direction (one-dimensional motion). In fact, for small displacements the point $E_2$ is constrained to move on a straight line (one-dimensional motion) in the plane identified by $A_2B_2C_2D_2$, with motion components represented by construction by the displacement, $\vec{s}_{E_2}$, velocity, $\vec{v}_{E_2}$, and acceleration, $\vec{a}_{E_2}$, vectors.

Again, as described above, it is possible to measure the relative displacement of $E_2$ with respect to any fixed point of the base $\overline{A_2D_2}$.

So, in summary, this particular and innovative mechanical configuration consisting of two classic Watt's Linkages positioned and integrally constrained as described above and shown in Fig. 4, constitutes an innovative mechanism that guarantees the point $E_2$, the geometric center of the rod $\overline{B_2C_2}$, to have a particular and innovative property, which differentiates it from all the others: for small displacements its overall motion, $\vec{s}_{t_{E_2}}(t)$, is described by the linear combination of the one-dimensional relative motions of the point $E_1$ in the plane $A_1B_1C_1D_1$ with respect to the base $\overline{A_1D_1}$ and of the point $E_2$ in the plane $A_2B_2C_2D_2$ with respect to the base $\overline{A_2D_2}$, both measurable, given by

$$\vec{s}_{t_{E_2}}(t) = \vec{s}_{E_1}(t) + \vec{s}_{E_2}(t)$$

$$\vec{v}_{t_{E_2}}(t) = \vec{v}_{E_1}(t) + \vec{v}_{E_2}(t) \qquad (16)$$

$$\vec{a}_{t_{E_2}}(t) = \vec{a}_{E_1}(t) + \vec{a}_{E_2}(t)$$

It is recalled and underlined again, that the directions of the component vectors are well defined and, by construction, always parallel to the planes $A_1B_1C_1D_1$ and $A_2B_2C_2D_2$, respectively.

If the conditions of small displacements and high ratios between the length of the two external rods and the central rod are not verified, the point $E_2$ describes a curve in space which is here called *"lemniscate in space"*, a combination of the lemniscates traced by geometric centers of the individual Watt's Linkage (see ref. [19] for the one-dimensional case). In such cases, it will be more or less difficult to obtain the effects of the invention depending on the degree of displacement in the non-linear regime and the possible compensation calibrations applied.

This reasoning can be further and directly extended to the three-dimensional case, obtainable simply by adding a new Watt's Linkage $A_3B_3C_3D_3$, whose base is rigidly connected to point $E_2$, in a similar way to what was previously described, with the condition that the plane $A_3B_3C_3D_3$ is independent of the other two and, therefore, not obtainable as their linear combination. In this case, the point $E_3$ will be, by construction, generally free to move in space regardless of whether the single geometric center points of the short rods of each Watt's Linkage are constrained to move on a straight line in the plane described by the respective Watt's Linkage. Despite, however, the freedom of motion in the space of this point, for small displacements its overall motion, $\vec{s}_{t_{E_3}}(t)$ , is described by the linear combination of the relative unidimensional motions of the point $E_1$ in the plane $A_1B_1C_1D_1$ with respect to the base $\overline{A_1D_1}$ , of the point $E_2$ in the plane $A_2B_2C_2D_2$ with respect to the base $\overline{A_2D_2}$ and of the point $E_3$ in the plane $A_3B_3C_3D_3$ with respect to the base $\overline{A_3D_3}$, all three measurable, given by:

$$\vec{s}_{t_{E_3}}(t) = \vec{s}_{E_1}(t) + \vec{s}_{E_2}(t) + \vec{s}_{E_3}(t)$$

$$\vec{v}_{t_{E_3}}(t) = \vec{v}_{E_1}(t) + \vec{v}_{E_2}(t) + \vec{v}_{E_3}(t) \qquad (17)$$

$$\vec{a}_{t_{E_3}}(t) = \vec{a}_{E_1}(t) + \vec{a}_{E_2}(t) + \vec{a}_{E_2}(t)$$

Obviously, it is possible to extend the mechanism to the case of more than three Watt's Linkages, a very relevant extension, as will be discussed below, for Watt's Linkage in the Folded Pendulum configuration, aimed at extending one-dimensional, two-dimensional and three-dimensional Folded Pendulums to the case of several stages. (multistage systems). This can be achieved by simply adding new Watt's Linkages $A_iB_iC_iD_i$ (up to $i = 3$ for independent stages, more for dependent stages, for example by doubling the independent ones), and rigidly connecting the bases $\overline{A_iD_i}$ to the respective points $E_{i-1}$. In this case, the motion of the point $E_i$ can be described, in a very general way, by

$$\vec{s}_{t_{E_i}}(t) = \sum_{j=1}^{i} \vec{s}_{E_j}(t) \quad \vec{v}_{t_{E_i}}(t) = \sum_{j=1}^{i} \vec{v}_{E_j}(t) \quad \vec{a}_{t_{E_i}}(t) = \sum_{j=1}^{i} \vec{a}_{E_j}(t) \qquad (18)$$

Finally, it is stressed that the Watt linkages can be nested, as we will see in the case of the Folded Pendulum, since this configuration can be used to implement a two-dimensional or three-dimensional shock absorber in which what matters is not the parallelism of the arms with respect to the acceleration of gravity as in the Folded Pendulum, but the adaptation of the shape of the mechanism to the modification of the anchorage, as happens in the car shock absorber.

**Extension of the Folded Pendulum in multiple dimensions**

As widely discussed in the previous section, the motion of the geometric center of the central rod of a classic one-dimensional Watt's Linkage is a very well approximated motion by a straight line (one-dimensional motion) for small displacements and for a high ratio between the length of the two external rods and the central rod, a condition imposed and verified in most of the projects.

This important property of Watt's Linkage is used very effectively in its particular configuration, called Folded Pendulum, whose dynamic behavior is equivalent to that of a horizontal mechanical oscillator [2, 3, 4, 5, 7, 8, 9]. In fact, this configuration expresses the original idea of positioning the rods in such a way that (at rest) the direction of the gravitational acceleration vector, g, is parallel to the longitudinal axes of the long rods and perpendicular to that of the central rod, which can be physically interpreted as a combination of a simple pendulum and of an inverted pendulum (long rods), connected to the central rod (inertial mass) and to an external supporting structure (frame) (Fig. 2), with remarkable physical and geometric properties [7, 8, 9], which has allowed the design of mechanical seismometers and accelerometers [3-9, 12, 14], mechanical seismic attenuators [12] and innovative tiltmeters [9, 20].

We define, first of all, a three-dimensional reference system, *xyz*, characterized by the *xy* plane parallel to the local horizontal and by the *z* axis parallel to the gravitational acceleration vector, g. We place a Watt's Linkage $A_1B_1C_1D_1$ in this reference system, with the base $\overline{A_1D_1}$ positioned integral to the three-dimensional reference system in a plane parallel to the plane *xz*, as shown, however, by way of example only, in the system 200 of Fig. 2, with the rods $\overline{A_1B_1}$ and $\overline{C_1D_1}$ parallel to the *z* axis and, therefore, in fact parallel to the gravitational acceleration vector, *g*, and the rod $\overline{B_1C_1}$ parallel to the *x* axis and, consequently, parallel at the local horizontal. The rotation joints, classically characterized by rotation axes mutually parallel and perpendicular to the plane of the mechanism $A_1B_1C_1D_1$ (positioned, without any loss of generality in the reference system xyz parallel to the *xz* plane), constrain the motion of the whole mechanism in that plan. Remember that these joints (indicated by circles enclosing a solid dot) can be simple rotational joints but also elastic joints, for example elliptical and/or circular, in traction and/or compression [3, 4, 5], geometric configuration however widely used, in particular, in the monolithic implementations of Folded Pendulum [3, 4, 5, 7, 8, 9].

As seen previously, the mechanical system is physically interpretable as a pendulum (rod $\overline{A_1B_1}$), an inverse pendulum (rod $\overline{C_1D_1}$) connected on one side to the base $\overline{A_1D_1}$ and on the other to the central rod (inertial mass) $\overline{B_1C_1}$. The mechanism shown in the figure is in fact a classic one-dimensional Ferguson Folded Pendulum, the basic element of all the implementations carried out so far of inertial platforms, one-dimensional attenuators and of one-dimensional seismic sensors using it as mechanical oscillator. Therefore, for small displacements and in the hypothesis of high ratios between the lengths of the long rods and of the short rod, the geometric center, $E_1$, of the rod $\overline{B_1C_1}$ is constrained to move only horizontally in the $A_1B_1C_1D_1$ plane and, therefore, parallel to the x axis.

In summary, for small displacements the motion of the point $E_1$ takes place with an excellent approximation on a straight line in the fixed plane identified by $A_1B_1C_1D_1$, with dynamics of the motion described by the displacement, $\vec{s}_x$, velocity, $\vec{v}_x$, and acceleration, $\vec{a}_x$, vectors. In particular, as previously anticipated (see Equation 11 and its description) but widely shown in the literature [3, 4, 5, 7, 8, 9], it is possible to measure the relative displacement of $E_1$ with respect to any fixed point of the base $\overline{A_1D_1}$. However, since the motion of the point $E_1$ is inertial for frequencies higher than the resonance frequency of the Folded Pendulum, the measure of this relative displacement, actually provides the measure of the absolute displacement, $\vec{s}_x$, of the base $\overline{A_1D_1}$ in the direction, *x*. Hence, the possibility of obtaining consequently also absolute velocity, $\vec{v}_x$, and acceleration, $\vec{a}_x$.

At this point, we use the architecture of the innovative two-dimensional/three-dimensional Watt's Linkage, described in the previous section, to extend the one-dimensional Folded Pendulum to the two-dimensional/three-dimensional case, through a suitable configuration, an extension never theorized, hypothesized or implemented so far.

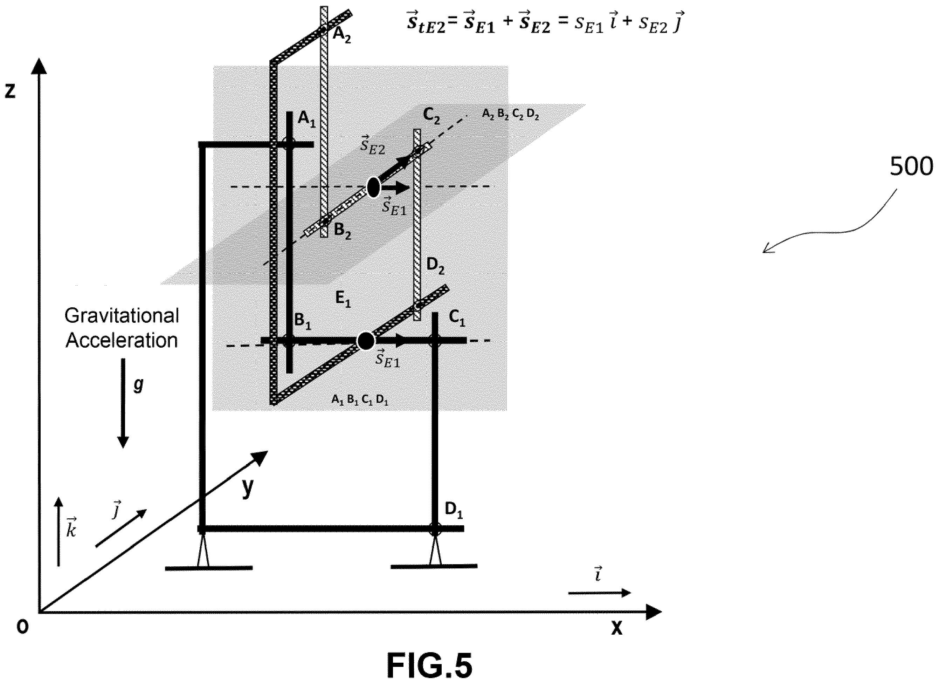

Referring to system 500 of Fig. 5, we position for this purpose a second Watt's Linkage $A_2B_2C_2D_2$ so that its base, $\overline{A_2D_2}$, is positioned in a plane parallel to the *yz* plane and that a point of its base (or more points, or a *'area'*, or *'more areas'*), is coincident with the point $E_1$ of the Folded Pendulum described previously and rigidly connected to it as shown, by way of example only, in Figure 5. The Watt's Linkage $A_2B_2C_2D_2$ is configured in such a way that the rods $\overline{A_2D_2}$ and $\overline{C_2D_2}$ are positioned parallel to the *z* axis and, therefore, in fact, parallel to the gravitational acceleration vector, *g*, with the rod $\overline{B_2C_2}$, this time parallel to the y axis. Also this second mechanism, as it has been configured, is in fact a classic one-dimensional Folded Pendulum oriented perpendicular to the first. In particular, for small displacements and in the hypothesis of high ratios between the lengths of the long rods and the short rod, the geometric center, $E_2$, of the rod $\overline{B_2C_2}$ is constrained by construction to move only horizontally in the plane $A_2B_2C_2D_2$, along a direction parallel to the y axis.

Therefore, the overall motion of the point $E_2 \ (\vec{s}_{t_{E_2}}(t), \vec{v}_{t_{E_2}}(t), \vec{a}_{t_{E_2}}(t))$ is described by the linear combination of the one-dimensional relative motions of the point $E_1$ in the plane $A_1B_1C_1D_1$ with respect to the base $\overline{A_1D_1}$ and of the point $E_2$ in the plane $A_2B_2C_2D_2$ with respect to the base $\overline{A_2D_2}$, both measurable, given by

$$\vec{s}_{t_{E_2}}(t) = \vec{s}_{E_1}(t) + \vec{s}_{E_2}(t) = \vec{s}_x(t) + \vec{s}_y(t)$$

$$\vec{v}_{t_{E_2}}(t) = \vec{v}_{E_1}(t) + \vec{v}_{E_2}(t) = \vec{v}_x(t) + \vec{v}_y(t) \qquad (19)$$

$$\vec{a}_{t_{E_2}}(t) = \vec{a}_{E_1}(t) + \vec{a}_{E_2}(t) = \vec{a}_x(t) + \vec{a}_y(t)$$

where $\vec{s}_{E_1}(t) = \vec{s}_x(t)$ e $\vec{s}_{E_2}(t) = \vec{s}_y(t)$ are the directions of these vectors, by construction always parallel to the planes $A_1B_1C_1D_1$ and $A_2B_2C_2D_2$, respectively, which in turn have been respectively positioned parallel to the x and y axes of the xyz reference system.

Here too, if the conditions of small displacements and high ratios between the length of the two external rods and the central rod are not satisfied, point $E_2$ describes a *"lemniscate in space"*, a combination of the lemniscate traced by the geometric centers of the individual Watt's Linkage (see ref. [19] for the one-dimensional case).

It is important to underline again that the motions of the two points in their respective reference systems (planes $A_iB_iC_iD_i$) are totally independent and individually linked to the transfer function described in Equation (11) of the Folded Pendulum relating to the degree of freedom being considered. Therefore, by carrying out two relative measurements of each point $E_i$ with respect to its base, it is possible to measure the two independent displacement vectors, aligned with respect to the x and y coordinates, which allow to obtain the absolute motion of the base $\overline{A_1D_1}$ in the xy plane, as reported in the Equation (19). In particular, it is important to underline again that, given the conditions of small displacements and high ratios between the length of the two external rods and the central rod, the motion of the point $E_2$ in the plane of the second Folded Pendulum, by construction, is not at all attenuated or modified in its dynamics by the motion of the first Folded Pendulum.

This new mechanism, invented and described here for the first time, is the first example of a two-dimensional Folded Pendulum, and therefore of a native two-dimensional oscillator with independent resonance frequencies related to each direction. In fact, the two components of the motion relative to the two directions, and therefore displacements, velocities and accelerations, remain totally independent, each determined only by the forcing relative to the respective component, characterized by resonance frequencies dependent only on the physical and geometric parameters of the corresponding Folded Pendulum, a property that allows the complete decoupling of the directions of origin of the external forcing.

Obviously, an appropriate choice of the physical and geometric parameters of the two Folded Pendulums and/or the use of appropriate calibration masses coupled to a suitable choice of the elasticity coefficients of the elastic joints, whether in traction or compression, as summarized in the previous section and extensively described for a one-dimensional Folded Pendulum in [3, 4, 5, 7, 8, 9], can allow the implementation of a two-dimensional mechanical oscillator characterized by a single resonance frequency, and, therefore, a homogeneous dynamic behavior in both directions, always allowing the perfect decoupling of the signals coming from the two orthogonal directions.

In this regard, it is necessary to use the general formula given by Equation (7), written twice for x and y, and solved as a system by placing $\omega_{0x}$ and $\omega_{0y}$ identical. Equation (7) must be written for each degree of freedom, since each pendulum allows the measurement of motion only in a specific direction. Therefore, in practice, in order to have the same resonance frequency in both directions, the parameters of the pendulums must be appropriately chosen, including the masses and lengths of the arms, the calibration masses, the ellipticity and the thickness of the joints. In this design choice, due account must be given to the fact that the mass of the second pendulum affects the central mass of the first pendulum and so on, through the equations described above.

This fundamental property allows all the properties of the classic one-dimensional Folded Pendulum to be preserved unaltered, including compactness and low resonance frequency, which are well known and well described in literature for the Folded Pendulum [3, 4, 5, 6, 7, 8, 9].

The mechanical architecture described can also be regarded as a single two-dimensional stage (attenuator or complementary sensor). With this in mind, one repetition of this basic architecture with the introduction of two new Folded Pendulums with the same orientations (for example the plane of the third one parallel to the plane of the first one, and the plane of the fourth one parallel to that of the second one), that implement a system similar to the one described in this section and dynamically described by Equation (19), allows the implementation of a multistage system, in this case a two-stage one. By repeating this procedure further, it is therefore possible to implement a multistage system (attenuator or sensor).

In this context, a particular case is the one in which the base $\overline{A_2D_2}$ of the second Folded Pendulum is positioned integrally to the short rod $\overline{B_1C_1}$ and parallel to it. In this case, the system is degenerate and the motion of $E_2$ remains one-dimensional. However, this mechanism can also be interpreted as a one-dimensional multistage (two-stage) system. Obviously, by increasing the number of Folded Pendulums positioned in a *"degenerate"* way, it is possible to implement a one-dimensional multistage Folded Pendulum, with very relevant mechanical characteristics and performances for the implementation of one-dimensional multistage attenuators and sensors, which are neither existing nor suggested today. In this regard, as it is derived for second degree systems, the attenuation is about 40 dB / decade per stage for each degree of freedom above the resonant frequency, with very low obtainable resonance frequencies.

The procedure that from the two-dimensional Watt's Linkage has led to the invention of the single-stage or multi-stage two-dimensional Folded Pendulum (including the multistage one-dimensional Folded Pendulum) can be repeated to the implementation of a three-dimensional Watt's Linkage, finalizing it to the implementation of a three-dimensional Folded Pendulum, the latter consisting of two horizontal Folded Pendulums and a vertical Folded Pendulum [3, 4, 5, 7, 8, 9].

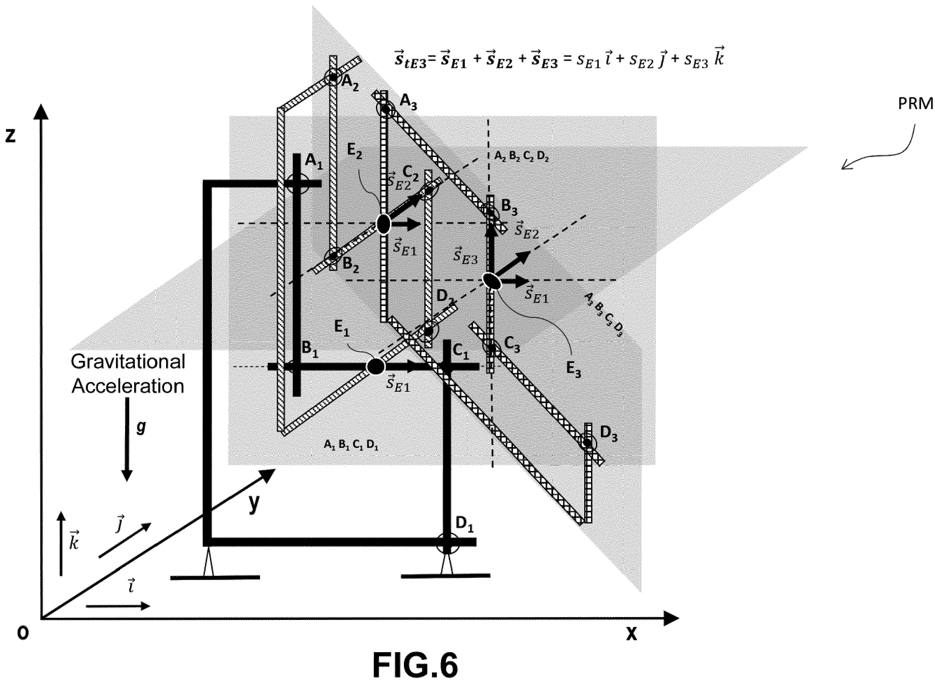

To this end, and referring to system PRM Fig. 6, it is possible to start, for example (but without any limitation to the generality of the procedure), from the two-dimensional Folded Pendulum, positioning the third Watt's Linkage in such a way that a point of its base, $\overline{A_3 D_3}$, is made coincident with point $E_2$ and rigidly connected to it so that its short rod, $\overline{B_3 C_3}$, is positioned perpendicular to the local horizontal and, therefore, lying in a plane perpendicular to the local horizontal, that the two long rods, $\overline{A_3 B_3}$ e $\overline{C_3 D_3}$, are perpendicular to the direction of gravitational acceleration, g, and that the motion of the point $E_3$, geometric center of the Watt's Linkage $(A_3 B_3 C_3 D_3)$ is perpendicular to the motion of the point $E_2$.

For small displacements and in the hypothesis of high ratios between the lengths of the long rods and of the short rod, the particular geometric configuration of this mechanism constrains the geometric center, $E_2$, of the rod $\overline{B_3 C_3}$ to move in the plane $A_3 B_3 C_3 D_3$ and, therefore, by construction, only vertically, along a direction parallel to the z axis.

Therefore, the overall motion of the point $E_3$ $(\vec{s}_{t_{E_3}}(t), \vec{v}_{t_{E_3}}(t), \vec{a}_{t_{E_3}}(t))$ is described by the linear combination of the one-dimensional relative motions of the point $E_1$ in the plane $A_1 B_1 C_1 D_1$ with respect to the base $\overline{A_1 D_1}$, of the point $E_2$ in the plane $A_2 B_2 C_2 D_2$ with respect to the base $\overline{A_2 D_2}$ and of the point $E_3$ in the plane $A_3 B_3 C_3 D_3$ with respect to the base $\overline{A_3 D_3}$, all measurable, given by

$$\vec{s}_{t_{E_3}}(t) = \vec{s}_{E_1}(t) + \vec{s}_{E_2}(t) + \vec{s}_{E_3}(t) = \vec{s}_x(t) + \vec{s}_y(t) + \vec{s}_z(t)$$

$$\vec{v}_{t_{E_3}}(t) = \vec{v}_{E_1}(t) + \vec{v}_{E_2}(t) + \vec{v}_{E_3}(t) = \vec{v}_x(t) + \vec{v}_y(t) + \vec{v}_z(t) \qquad (20)$$

$$\vec{a}_{t_{E_3}}(t) = \vec{a}_{E_1}(t) + \vec{a}_{E_2}(t) + \vec{a}_{E_3}(t) = \vec{a}_x(t) + \vec{a}_y(t) + \vec{a}_z(t)$$

where $\vec{s}_{E_1}(t) = \vec{s}_x(t)$, $\vec{s}_{E_2}(t) = \vec{s}_y(t)$ e $\vec{s}_{E_3}(t) = \vec{s}_z(t)$ are the directions of these vectors, by construction always parallel to the planes $A_1 B_1 C_1 D_1$, $A_2 B_2 C_2 D_2$ and $A_3 B_3 C_3 D_3$ respectively, which in turn have been respectively positioned parallel to the x, y and z axes of the xyz reference system.

This new mechanism, invented and described here for the first time, is the first example of a three-dimensional Folded Pendulum, and, therefore, of a three-dimensional oscillator with generally different and direction-dependent resonance frequencies. In fact, the three components of motions relative to the three directions, and therefore displacements, velocities and accelerations, remain in fact totally independent, each determined only by the forcing relative to the respective component, with resonance frequencies determined only by the physical and geometric parameters of the corresponding Folded Pendulum.

The invention, in all of its configurations, applies to both small and large movements, of points $E_1$, $E_2$, and possibly $E_3$. In the case of large displacements there could be a component of each vector of these points along another direction of the plane. In this case it is also possible to use a system that measures the displacement in this further direction, so that the information is not lost and the three-dimensional displacement is completely reconstructed. This is a matter of reading the displacements and not of the composition of the vectors. Up to now, the example of motion on a straight line has been used for simplicity of explanation, without any limitation to the generality of the present invention.

Obviously, a suitable choice of the physical and geometric parameters of the two Folded Pendulums and/or the use of suitable calibration masses coupled to a suitable choice of the elasticity coefficients of the joints, whether in tension or compression, as summarized in the previous section and extensively described for a one-dimensional Folded Pendulum in [3, 4, 5, 7, 8, 9], can allow the implementation of a three-dimensional mechanical oscillator characterized by a single resonance frequency, and, therefore, by a dynamic behavior homogeneous in all directions, although capable to perfectly decouple the signals coming from the three orthogonal directions.

This innovative mechanism introduced and described here allows for the first time the creation of 'native' three-dimensional mechanical oscillators with independent degrees of freedom, with the advantage of a complete decoupling of the directions of origin of the external forces.

This procedure, invented and described here for the first time, can obviously be reiterated as seen previously for the one-dimensional and two-dimensional cases, for the implementation of multistage oscillators. In fact, a periodic replica of the basic structure of a one-dimensional, two-dimensional and/or three-dimensional Folded Pendulum actually leads to the implementation of a multistage Folded Pendulum, and, therefore, going into application details, to attenuation systems and/or multistage inertial platforms, as well as to multistage oscillation systems for the implementation of ultrasensitive low frequency sensors.

It is important to stress that the implementation procedure of a *'native'* two-dimensional/three-dimensional Folded Pendulum does not even require that the Folded Pendulums lies in mutually orthogonal planes, aligned, for example, along the *x, y,* and *z* axes of a generic system of reference xyz. In order to reconstruct the displacement vectors in two/three dimensions, it is, in fact, important that the motions of $E_1$, $E_2$ and $E_3$ have components that are independent of each other. In fact, for example, in the two-dimensional case the motion of $E_2$ must not be obtainable as a linear combination of the motion of $E_1$ alone, while in the three-dimensional case the consideration already made for the motion of $E_2$ applies to the motion of $E_3$ that must not be a linear combination of the motions of $E_1$ and $E_2$. With these positions it is, therefore, always mathematically possible, although obviously not in an optimal way as it would be in the case of orthogonal positioning of the planes $A_iB_iC_iD_i$, to reconstruct the components with $\vec{s}_x(t)$, $\vec{s}_y(t)$ and $\vec{s}_z(t)$, using the components $\vec{s}_{E_1}(t)$, $\vec{s}_{E_2}(t)$ and $\vec{s}_{E_3}(t)$. The non-optimality is related to the fact that when the planes of motions are not orthogonal to each other, it is necessary to operate vectorially on the displacements of the points $E_i$ in such a way as to reconstruct the independent components (*xyz*) of the motion itself, also compensating for the different directional sensitivities emerging from the non-orthogonality of the motion planes. This operation does not show theoretical problems, but it can introduce several ones from an experimental point of view. In fact, having to operate in general with measurements affected by errors, it is evident that the application of procedures for signal extraction and for the compensation of sensitivity due to inadequate alignment of the planes can lead to significant effects of error propagation, making, consequently, to decrease precision and accuracy of the measurements themselves. However, this reduction may be acceptable in some applications of interest.

It is also important to underline that the positioning of the Watt's Linkage in the geometric center, as described, is obviously optimal for the implementation of ideal and uncontrolled inertial oscillating systems, for which it is important to minimize the couplings among the different degrees of freedom, maintaining a large dynamic.

However, there are several applications, today even in the majority, in which the free motion of the inertial mass is not measured, but the latter is maintained in its rest condition by means of external forces generated by a control system, providing its acceleration as output signal.

This implies that the displacements made by the inertial mass are very small, so the hypothesized ideal positioning of the base $\overline{A_{i+1}D_{i+1}}$, of the *(i+1)*-th Folded Pendulum coinciding with the point $E_i$ of the *i*-th Folded Pendulum can be considered applicable not only to the point $E_i$, geometric center of the generic rod $\overline{B_iC_i}$, but to a generic segment (also empty) of the rod $\overline{B_iC_i}$, centered on point $E_i$, the width of which can be determined from time to time in turn by the geometry of the Folded Pendulum and by the level of precision in the couplings among the different degrees of freedom to be achieved. More details are given below.

**Implementation of a two-dimensional inertial platform**

It is evident that the innovative mechanisms described above lead to different interpretations and are applicable in innumerable cases as single-stage and/or multistage mechanical systems in different scientific, civil and industrial fields such as attenuation systems and/or as mechanical sensors. In both cases they are characterized by high quality and relevant performances, as these mechanical oscillators are limited in principle (however experimentally demonstrated in the case of monolithic Folded Pendulums) only by the thermal noise of the mechanical structure, much lower than the mechanical noise (seismic, etc.) present on the earth's surface to be attenuated or to be measured, respectively [22].

Using the fact that the shape, dimensions, materials and, in general, the physical and geometric characteristics of the mechanical components of the Watt's Linkage have to be considered degrees of freedom in the design and implementation of the mechanism, provided that the constraints defined above relating to the Watt's Linkage and the Folded Pendulum in their one-dimensional meaning and their two-dimensional/three-dimensional extension, object of the present invention, are fulfilled, it is possible to implement an infinite number of different structures specialized and optimized in relation to the specific application.

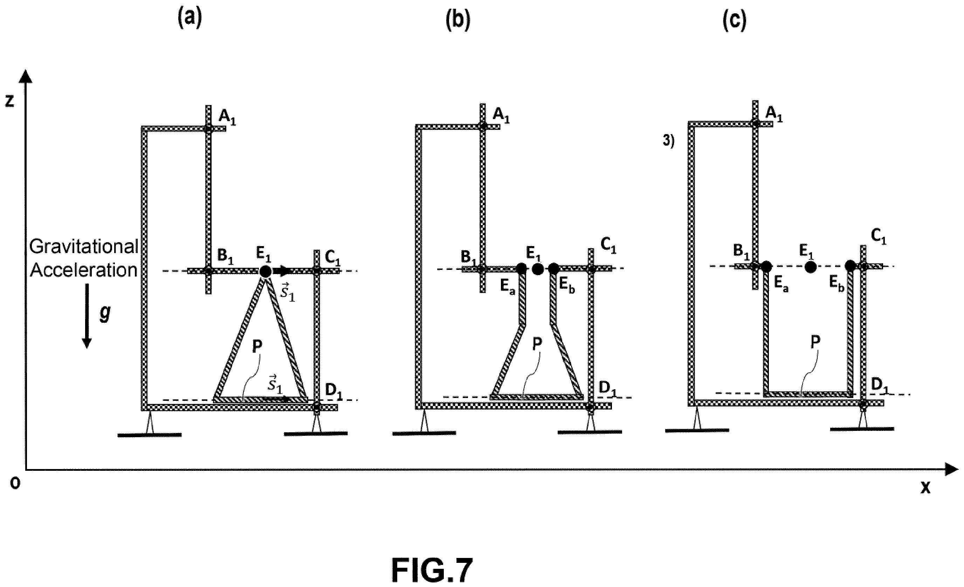

By way of example only, but not exhaustive of the application possibilities of the invention presented here, an example of a simple one-dimensional attenuator consisting of a single stage is shown (Fig. 7), obviously replicable for several degrees of freedom and several stages, for better attenuation. In particular, this figure shows a possible specialization of the one-dimensional Folded Pendulum, one-dimensional only for clarity of exposure, to the implementation of an inertial platform, as seismic attenuator.

This figure shows, in particular, how the rods constituting the Folded Pendulum have been specialized in such a way as to create an inertial platform ("P") whose central point has the same dynamic properties as point $E_1$. Therefore, by selecting the lengths of the rods, the coefficients of elasticity of the joints and the different masses of the components it is possible to implement a single-stage one-dimensional horizontal platform that has the property of inertial mass for frequencies higher than the resonance frequencies of the Folded Pendulum. In particular, Fig. 7 in (a) shows that the configuration chosen for the implementation of the platform (described as ideal in the text of the previous section) constrains the motion of the whole platform to follow exactly, by construction, the motion of the point $E_1$, and, therefore, to follow a linear translational motion.

Fig. 7 in (b) shows, instead, a platform not rigidly constrained to point $E_1$ but at the ends of the segment $\overline{E_a E_b}$, which by construction can have a component, although very small by design, in a direction other than $x$, but always in the plane of the pendulum. Therefore, this platform has a motion that can only be approximated to a linear motion, which however is sufficient for the implementation of platforms controlled with automatic control systems (in feedback), providing the acceleration of the system as output data, according to what discussed above.

Finally, Fig. 7 in (c) shows a one-dimensional platform not constrained to the point $E_1$ but to the ends of the segment $\overline{E_a E_b}$, wider than that of Fig. 7 (b), which can be characterized in a similar way and with the same properties.

It should be specified here that the points $E_a$ and $E_b$ can also be not internal to the segment between joints $B_1$ and $C_1$, but external (even one only), and therefore they are positioned along the geometric line that includes joints $B_1$ and $C_1$.

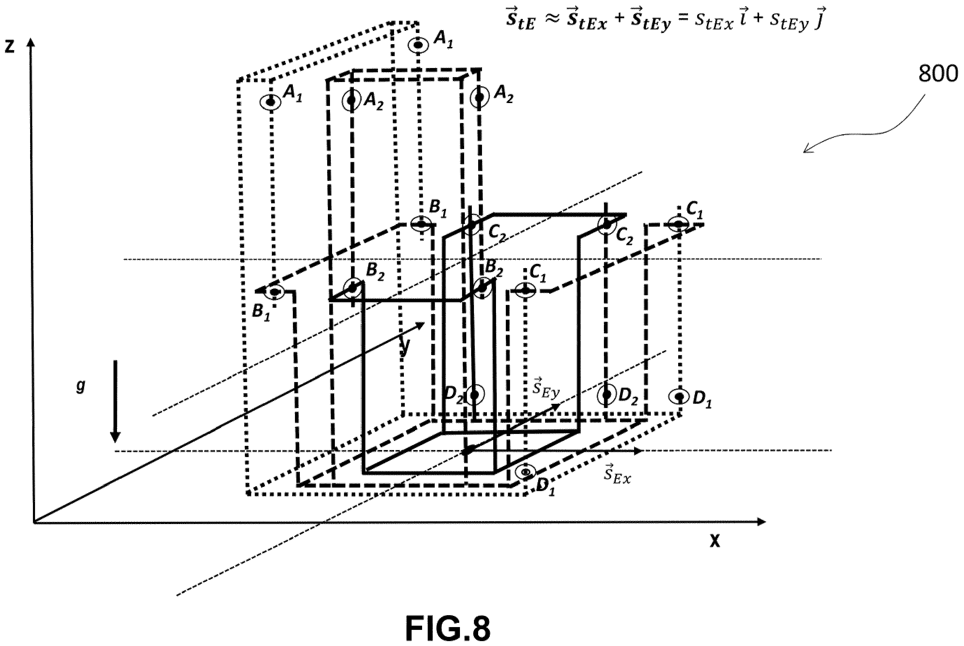

An application example 800 of a two-dimensional system that can be used as an inertial platform, but also as a two-dimensional horizontal sensor is presented in Fig. 8, de facto a direct extension to the two-dimensional case of the typology of system shown as one-dimensional case in Fig. 7 (c).

The two-dimensional system shown in Fig. 8 consists, in fact, of two Folded Pendulums, one for each degree of freedom, in turn each consisting of Folded Pendulums (preferably identical) placed side by side and constrained so as to constitute a single Folded Pendulum, thus not modifying in any way what has been said and described above.

By side by side we mean in general that in addition to the Folded Pendulums described so far (but what has been said applies to $N$ Folded Pendulums or Watt's Linkages), for each $i$-th Folded Pendulum there may be $M_i$ ($M_i \geq 0$) further Folded Pendulums, each including a further $m_i$-th support, a further $m_i$-th central arm, a further first arm (or simple arm) $m_i$-th, and a further second arm (or inverted arm) $m_i$-th (with their respective further central joints (of the central arm) and terminals (of the arms connected to the medium) rigidly connected respectively to said $i$-th support, $i$-th central arm, $i$-th first arm (or simple arm), and $i$-th second arm (or inverted arm) of the $N$ Folded Pendulums illustrated so far. It is an implementation (doubling or multiplication) that can have an anti-torsion effect, because if the Parallel Linkage/Folded Pendulum is too thin, it may oscillate transversely and the degrees of freedom may couple. Torsion can be also avoided by providing a single joint transversely extended.

Obviously, it is possible to implement the same system also directly using the configuration described in Figure 7 (a).

This system, which in fact can constitute a single stage of a multistage attenuation system, is characterized by two resonance frequencies that are generally different, but which can be made perfectly identical, by means of a suitable combination of the physical geometric parameters and the elasticity of the joints, constituting each pendulum, but also using suitably positioned calibration masses [3, 4, 5, 7, 8, 9].

Here it should be specified that the components of the motion, independent by construction and oriented in Figure 8 according to the $x$ and $y$ directions, can be made as small as desired by using a suitable feedback system, which theoretically could also consist of two independent one-dimensional control systems. Furthermore, in order to provide as complete a picture as possible, it is important to underline that it is technically also possible to foresee the use of automatic feedback control systems (typically used for the attenuation of the residual motion of the mechanical system) to calibrate the resonance frequency of each single degree of freedom of the system. It is, in fact, well known from the theory of automatic controls that a suitable designed feedback control system can change the resonance frequency of the controlled system bringing it to lower or higher values depending on the typology of feedback applied (negative or positive) and, therefore, in the case of the present description, by carrying out a specific calibration procedure of the resonance frequencies of the system.

Furthermore, in the present description, by central arm is meant any rigid central group, not necessarily linear, with a first and a second end connected to two of said joint systems. In this case, the two linked points of the above platform are positioned along the geometric segment between the said first and the said second end, obviously in positions coincident with material points of the group, but which may be such as not to have a straight continuation between them. In other words, the central group starts with a linear part from the two joints, and then changes shape. These two points are placed on the initial straight parts that come out of the joints.

Again, the term "arm" means that part of a rod or mechanical element between two joints or between a fixed point and a joint, and therefore the length of the arm is meant as the distance between these two points. The rod or the mechanical element themselves can actually continue beyond the joint or the fixed point, and in this case the mass of the whole rod affects the position of the center of gravity but not of the geometric center defined as the central point of the arm.

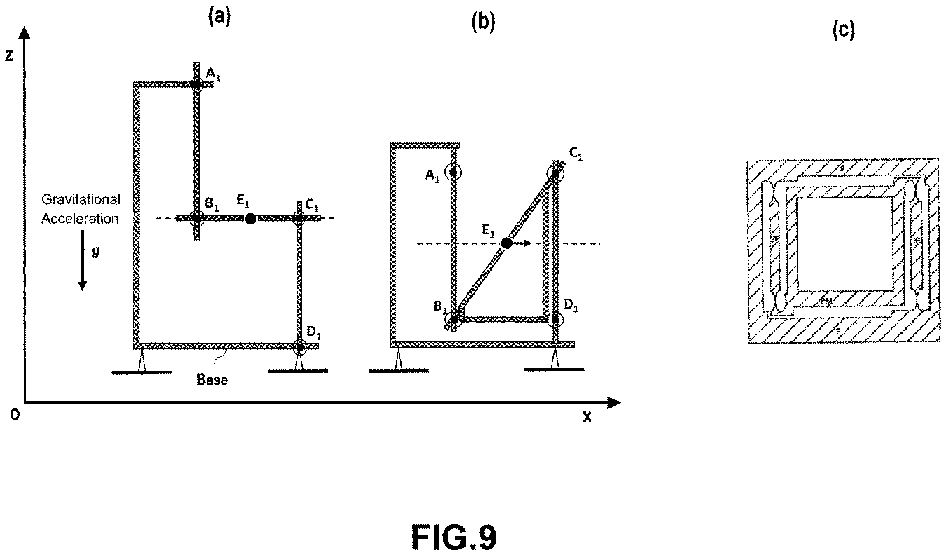

On the other hand, Fig. 9 shows the typical implementation scheme of folded pendulums aimed at the containment of the dimensions in order to obtain effective and compact mechanisms. Obviously, this scheme can be reiterated for multiple stages of freedom. The figure on the right shows a monolithic construction aimed at the reduction of the pendulum size.

The mechanical design of this system can be obtained, in an equivalent way, according to the invention, in such a way as to constrain the motion of point $E_1$ on a line parallel to the x direction, which in this case defines the local horizontal. This allows us not to have to apply corrections due to coupling of the degrees of freedom, corrections which are however possible according to the invention.

Obviously, the same considerations made in the description of the different systems shown in Fig. 7 apply to this type of system, since the system represented in this way is equivalent to that shown in Figure 7 (c).

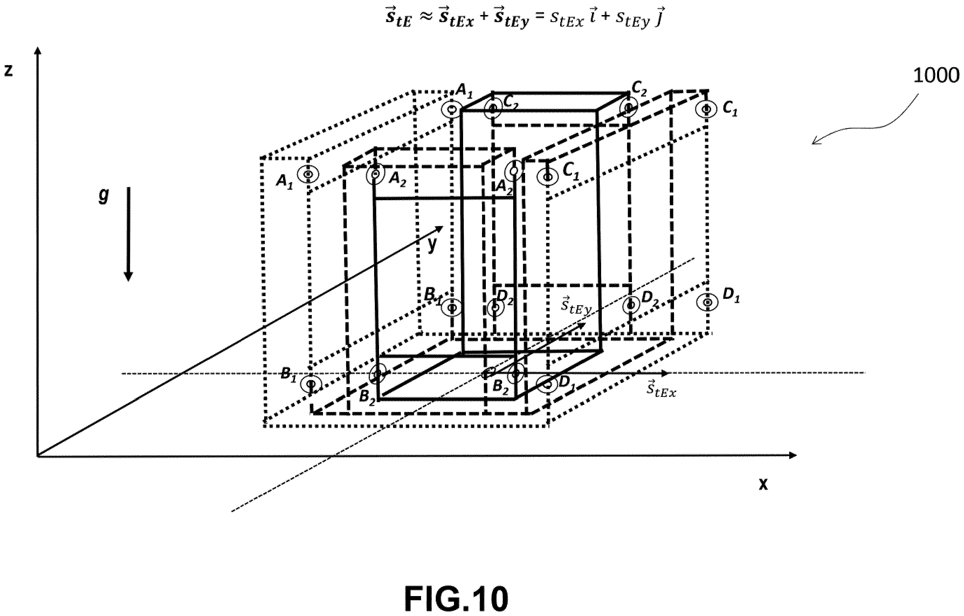

An application example of a compact two-dimensional system that can be used as an inertial platform, but also as a two-dimensional horizontal sensor 1000 is presented in Fig. 10, de facto a direct extension to the two-dimensional case of the system typology represented as a one-dimensional case in Fig. 9 (b) according to the invention.

The two-dimensional system shown consists of two Folded Pendulums, one for each degree of freedom positioned close to each other and rigidly connected, each in turn implemented by means of (preferably) identical Folded Pendulums so as to constitute a single Folded Pendulum, thus not modifying in any way what said and described above. In general, by close to each other pendulums (two or more) it is meant that, for each $i$-th pendulum as described, there may be $M_i$ ($M_i \geq 0$) further one-dimensional pendulums, each including a further $m_i$-th support, a further arm $m_i$-th central arm, a further straight $m_i$-th simple arm, and a further $m_i$-th inverted arm (with their respective further central and $i$-th terminal joints) rigidly connected respectively to said $i$-th support, $i$-th central arm, simple $i$-th arm, and inverted $i$-th arm of the $N$ Folded Pendulums illustrated so far. It is an anti-torsion (multiplication) construction, because if the parallel linkage/Folded Pendulum is too thin, it may oscillate transversely and the degrees of freedom may couple. Torsion can be also avoided by providing a single joint extending transversely.

The same is true for the above multidimensional Watt's Linkages.

Obviously, it is possible to implement the same system also directly using the configuration described in Fig. 9 (a).

This system, which in fact can constitute a single stage of a multistage attenuation system, is characterized by two resonance frequencies that are generally different, but which can be made perfectly identical by means of a suitable combination of the physical and geometric parameters and of the elasticity of the joints, constituting the individual pendulums, but also using appropriately positioned calibration masses [3, 4, 5, 7, 8, 9].

Prototypes of these platforms have been made which have shown that it is possible to reach resonance frequencies of the platform of the order of a few tens of mHz (which in fact however does not constitute a limit), guaranteeing in this motion that the mass of the central platform is inertial above the resonance frequencies.

It is also important to underline that the performance of a one-dimensional Folded Pendulum is not absolutely determined by the masses and geometric dimensions of the components (and therefore, linked to the overall dimensions of the system), as it is widely demonstrated in the literature [3, 4, 5, 6, 7, 8, 9]. It is, in fact, possible to implement attenuators (or sensors) characterized by almost identical absolute performance in terms of frequency, band and sensitivity, but of widely different dimensions and weights, the definition of which can only be a function of the type of application required. What has been stated is also directly evident from the one-dimensional model reported in the description of the invention and, in particular, from equations 7, 8, 9, 10. In fact, for example, but only to mention a characteristic that is very evident from the above equations, the gravitational equivalent elastic constant, $K_{geq}$, a key element in determining the resonance frequency of the mechanical oscillator and, therefore, of its mechanical performances, does not depend on the absolute values of the masses that constitute it, but only on the differences in their values.

This scalability of the system, which the present invention allows to extend to two-dimensional and three-dimensional cases by means of the geometric construction previously described and object of the invention, allows at the same time the implementation of scalable test systems, guaranteeing the possibility of implementing low-cost laboratory prototypes, which allow to study and to predict the dynamic behaviors and final performances of full-scale systems. It is not relevant for the purpose of evaluation of the dynamic behavior and performances that can be obtained if the prototypes are implemented in a monolithic or modular architecture, meaning by "modular implementation" the technique that allows the implementation of individual parts constituting the Folded Pendulum (arms, inertial mass, supports, joints, etc.) to be mounted using fixing systems suitably chosen according to the requirements and dimensions and weights of the components themselves (fixing plates, etc.).

However, it is also important to underline that fully monolithic implementations, although perfectly achievable using the modern technologies of precision numerical milling and electro-erosion by immersion, moreover fully demonstrated [3, 4, 5, 6, 7, 8, 9], are generally characterized by higher costs due to the greater design and construction complexity, but they are justifiable (also in economic terms) for projects that require performances in which one-dimensional, two-dimensional and/or three-dimensional Folded Pendulums must achieve sensitivity performances limited by the intrinsic thermal noise of the oscillator itself [22].

Therefore, in the initial experimental embodiments relating to this invention it was preferred the use of the modular technique, assembling the individual components by means of suitable fixing plates, thus implementing in a simple and very cheap way, the attenuator (platform) (and the sensor) of the required dimensions. It is reiterated that these prototype implementations have the advantage of being very close to practical implementations for real applications, also allowing the study aimed at minimizing costs in terms of machining, ease of assembly and the possibility of guaranteeing easy maintenance and replacement of any faulty component.

Just to cite an example, a fully modular prototype of a two-dimensional attenuation stage has been implemented as described in figure 10, with overall dimensions equal to 100 cm x 100 cm x 135 cm (length x width x height), characterized by elliptical elastic joints of different thickness for the two degrees of freedom, made by electro-erosion (EDM) from a single block of Ergal (A1 7075-T6), whose geometric dimensions (30 mm x 40 mm x 200 mm) remain proportional to those used classically in monolithic oscillators made and published in literature (ellipticity ratio 16/5) [7, 8, 9]. The output mechanical signal in this prototype is obtained by means of a readout system based on an optical lever. The choice of this mechanical signal readout system (as it would have been the choice of a LVDT, interferometric, capacitive, etc. readout system) does not constitute a limitation for the operation or for the sensitivity of the mechanical system, object of the invention, but actually determines the overall sensitivity of the readout-mechanical system (the mechanical system being limited by the thermal noise of the mechanical oscillator itself, as widely clarified and reported in the scientific literature [5, 6, 7, 22]).

In particular, preliminary experimental measurements on this prototype have shown that the natural frequencies of this platform (attenuator) are of the order of 30 mHz, very close to the design frequencies, obtained by numerical simulation.

**Application of the invention to the implementation of systems aimed at the safety of the population**

The simple application described in the previous paragraph highlights the different and numerous application possibilities of the class of mechanical systems object of the invention.

By way of example only, we recall the problems of the structural safety of buildings, especially housing, in relation to the occurrence of seismic events. In fact, one of the main problems currently subject to great scientific and technical attention is that of the seismic safety of buildings and the study and development of technologies that make them insensitive to seismic stresses.

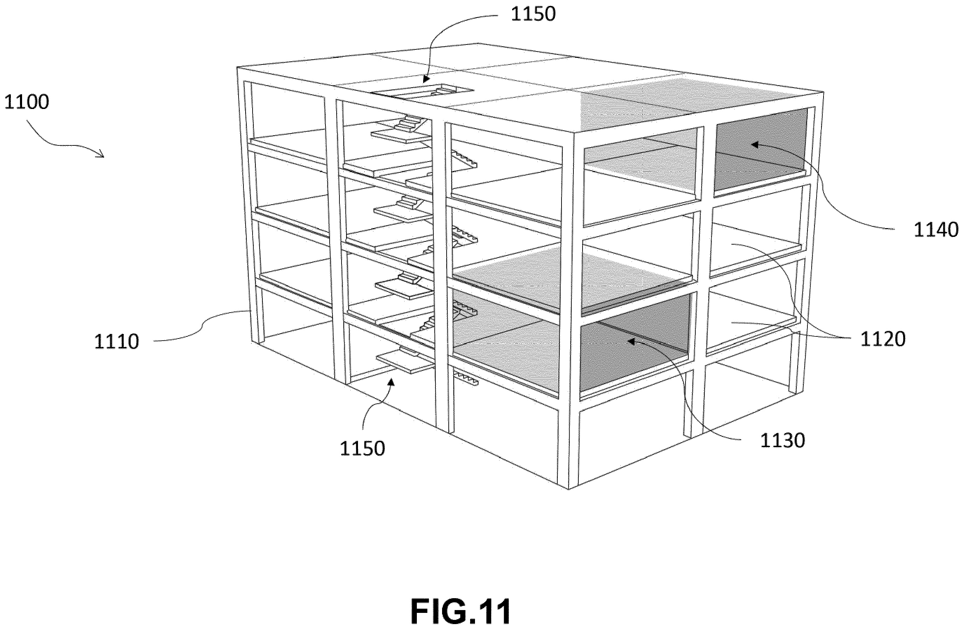

One of the possible and direct solutions that this invention allows to identify is shown schematically in Figure 11. The figure shows a possible construction scheme of a building 1100 with several floors 1120 and several apartments 1130, 1140 per floor constituted (with the term "building" we mean any structure resting on the ground, including for example hospitals with operating and hospital rooms and anything else necessary), with, for example, an internal staircase 1150. According to the invention, in one or more apartments as many two-dimensional stages, as described above, are used connected by the elastic joints (A and D) to a basic structure consisting of the building frame 1110 anchored to the ground, capable of supporting these stages. The stages are not shown as in the previous figures, but two apartments 1130, 1140 are highlighted in which these stages can be applied. It is also possible to apply three-dimensional stages also to dampen vertical oscillations. The stages, in any case, can also be multiple, that is, each direction can have several nested stages.

Figure 11, in fact, schematically shows the example of a multi-storey building with several apartments per floor. A suitable design of the mechanics (dimensions and elastic characteristics of the joints, dimensions of the arms, materials to be used, etc.) allows the implementation of apartments (which we recall can be schematized as platforms) that have the possibility of horizontal motion, characterized by very low resonance frequencies (even below mHz) obtainable both directly in the design phase (natural resonance frequency in absence of feedback control systems) and through the use of feedback control systems, which can also be aimed at damping the resonance peak typical of the harmonic response of the system (although generally quite low, since systems with a resonance frequency of the order of or lower than mHz are usually characterized by very low Q). This mechanical configuration makes each single apartment in fact insensitive or very little sensitive to seismic stresses in the frequency band higher than its resonant frequency, being in fact an inertial mass in this band.

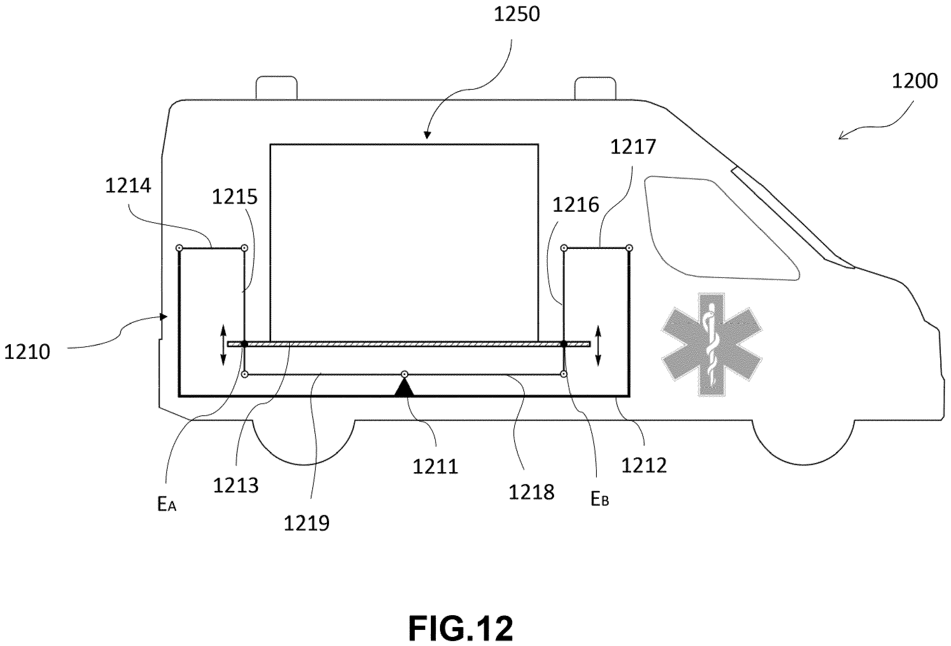

Similarly, it is possible to think of other applications in completely different fields. A possible application is in the emergency medicine field, with a foreseen possibility of carrying out surgical operations or medical analysis in real time within moving structures, such as, for example, ambulances (Figure 12). In these cases, a correct design of the vertical and horizontal damping stages may allow the creation of a platform inside the ambulance 1200 (which in this case would assume the role of external support; in any case what will be said applies to any vehicle), inertial for frequencies higher than the resonance one of the three degrees of freedom. A platform made in this way, being de-coupled from the motion of the vehicle, can be used as a support for carrying out medical operations even on board of a moving vehicle.

In the figure, a stage 1250 is highlighted, not in scale, on which to place a medical operation cabin. The stage 1250 is positioned on a base 1213, damped through a system 1210 according to the invention, in the example consisting of a double Watt's Linkage. It is specified that the arms are not represented in the scheduled reciprocal dimensions for a better readability of the figure.

The system 1210 includes a 1212 frame (shown below, but equally applicable above) to which the two Watt's Linkages are connected. For simplicity, the two Watt's Linkages are made starting from a single support point 1211 fixed to the vehicle structure through the frame 1212.

The first Watt's Linkage on the left has a first arm 1214 connected through a joint to the frame 1212, and a second arm 1219 connected to the frame 1212 through a different joint in position 1211. The first and second arm are connected by the central arm 1215, to which the base 1213, that supports the stage 1250, is rigidly connected. In the figure the fixing point $E_A$ is not necessarily in the optimal position. Please refer to the above for the different possible placements of point $E_A$, including the option to create two separate points not directly connected to each other, as in Figure 7.

On the right side there is, optionally, a second Watt's Linkage with the same structure. The first arm 1217 is connected to the frame 1212 through a joint, while the second arm 1218 is always connected to the frame 1212 but at the point 1211. The central arm is the 1216, to which the base 1213 is connected at the point $E_B$.

The stage 1250 is the equivalent of the apartment in Figure 11, and, therefore, a system according to the invention can be attached to it, capable of damping horizontal oscillations. The stage can be two-dimensional or even three-dimensional to further dampen vertical oscillations. The stage, in any case, can also be multiple, that is, each direction can have several connected stages.

In this application case, the system can benefit from elastic joints for vertical damping (to balance the weight force) or magnetic damping (as in the vertical pendulum of patent EP2643711 B1), which can also be used in all the other cases described.

Another example of application is, instead, that of the reduction of the pitching and rolling motion for the stabilization of holds or cabins in ships, in order to make it easier the reduction of the forcing due to the wave motion as regards the load, or in order to promote well-being on board in the case of passenger cabins. Also in this case, the architecture of a cabin (or of a hold, which can however always be divided into several parallel platforms, similarly to the case of the apartments positioned on a single floor in Figure 11) can be schematized in a similar way to what has been done in the example relating to the ambulance.

**Implementation of a two-dimensional inertial mechanical sensor**

The simple modeling presented in the description of the classic Folded Pendulum allows to verify the double possibility of using a folded pendulum as an attenuation system (transfer function described by equation (14)) and as a mechanical oscillator aimed at implementing an inertial mass for the measurement of the absolute displacement of the frame with respect to this mass (transfer function described by Equation (11)). Therefore, apart from optimizations related and functional to specific applications, the inertial platform (attenuator) described above and implemented as a prototype can be seen as a seismic sensor (native seismometer) with advantageous properties. In fact, in particular, the platform of the first Folded Pendulum (external Folded Pendulum) is in fact inertial for the degree of freedom defined by the direction of its free motion for frequencies greater than the resonance frequency (typically but not limited to $f = 30$ mHz). The platform of the second Folded Pendulum (internal Folded Pendulum) is, on the other hand, inertial by construction for both horizontal degrees of freedom (as described and object of this invention), characterized by a resonance frequency typically but not limited to the order of $f = 30$ mHz for both degrees of freedom (obtained following a finalized mechanical design based on the methodology described in the present invention), mechanically behaving as an ideal inertial sensor above this frequency, but, also in this case, with sensitivity limited by the readout system of the mechanical signal and not of by mechanics itself, as widely clarified and reported in the scientific literature [5, 6, 7, 22]. Therefore, the measurements of the relative displacements between the inertial mass and the bases of the Folded Pendulums, provide the absolute motion of the ground to which the pendulum is anchored, regardless of the typology of readout system used.

**Use for shock absorbing of vehicles with action on the axles**

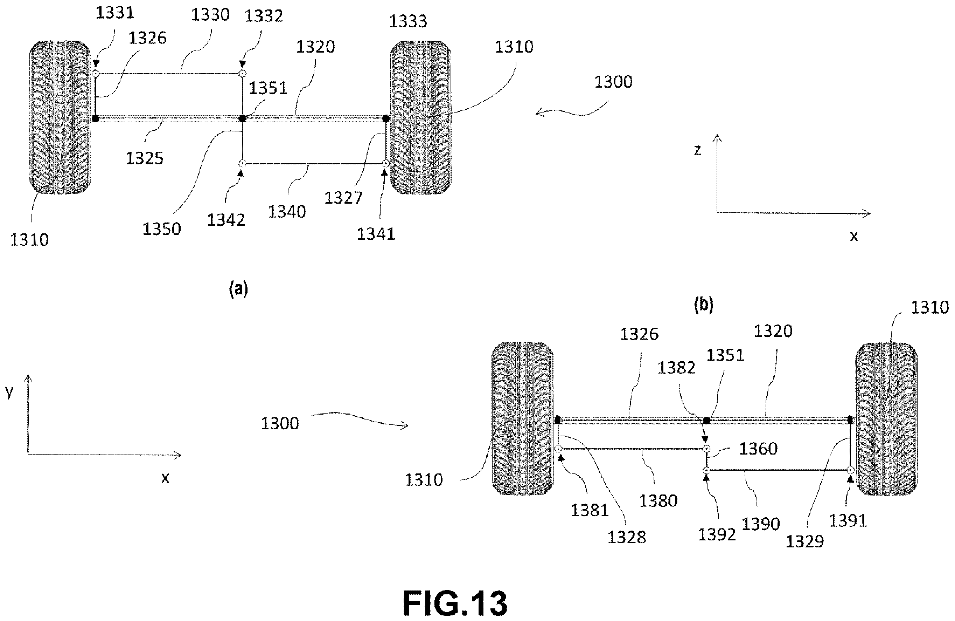

Referring to Fig. 13, an application of the invention consists in damping an axle 1300 of a vehicle (not shown). A frame consisting of segments 1325, 1326, 1327 is connected to the axis 1320 between two wheels 1310, in one or more points or areas.

Two opposite arms 1330, 1340 are connected to this frame by means of the corresponding joints 1331 and 1341. The two arms 1330 and 1340 are joined, through the corresponding joints 1332, 1342, by a central arm 1350, on which a point 1351 has been represented which is not connected to the axis 1320 but moves in the plane of the figure (x - z axes). In practice, the axis 1320 is behind the central axis 1350. The joints have an axis perpendicular to the figure.

At the same time, a second Watt system is applied on point 1351 (or set of points or frame area 1325, 1326, 1327) of the first Watt system.

Specifically, a frame consisting of the segments 1328, 1326 and 1329 is fixed at point 1351 of the first Watt system, but it is not connected in any way to the axis 1320 between the wheels 1310. The fact that it appears overlying in the figure is due to the optimal central position of point 1351.

The first arm 1380 of this second system is rigidly connected to the frame described through the joint 1381, while the second arm 1390 is connected to the frame through the joint 1391. The central arm is indicated with the reference 1360 and it is connected to the first and second arm with the respective joints 1382 and 1392.

The vehicle chassis is connected to a point (or zone, or plurality of points as explained above for the other embodiments) of the central arm 1360. The direction of the arms is only schematic, other directions are possible within the same operating principle.

Through the axes represented in the two cases, it is clear that in (a) there is a vertical damping of the oscillations, while in (b) there is a horizontal damping (perpendicular to the force of gravity) of the oscillations. Watt's second system in (b) moves with the first in (a), while providing damping in a direction perpendicular to the latter.

As in the case of the ambulance, an additional stage can be added to obtain a three-dimensional system according to the invention, with an additional damping direction.

Thus, a generalization of the Watt system applied to motor vehicle axles was achieved.

**Use with the calibration mass**

The simplest methods to be used for the calibration of the resonant frequencies of the different degrees of freedom of the two-dimensional and/or three-dimensional (even multistage) Folded Pendulum can be considered extensions of the classical methods, which are well known and described in the scientific literature relating to general calibration techniques of a mechanical oscillator, and in particular those relating to the specific case of the one-dimensional Folded Pendulum [3, 4, 5, 6, 7, 8, 9]: feedback control and calibration by adding and positioning a mass, $m_{t}$, to be made integral to the inertial mass, $m_c$, as schematized in Figure 1 and described by the model presented in the description (Eq. 1-14). It is clear, however, that the extension of the Folded Pendulum to the two-dimensional and/or three-dimensional (even multi-stage) case involves some construction constraints, moreover technically predictable, which can be summarized in:

1. Feedback control. It can be applied independently to any degree of freedom by independently and directly extending the one-dimensional feedback control and can be used both for the damping of residual motions and for the change of the resonance frequency of each individual degree of freedom.

2. Calibration Masses. It is applicable to any degree of freedom, in a completely similar way to what is schematized in Figure 3 ($m_t$) and reported in the model (Eq. 1-14).

There is, however, a substantial difference in application between the first and the second method. In fact, while in the case of use of feedback control systems, the design and calibration of the latter can be totally independent, since each control system can carry out the calibration for its own degree of freedom, as regards the second the insertion of calibration masses in the different stages involves a change and redistribution of the masses, an effect the more important the more the stages and/or the degrees of freedom are external since these modify the values of the (equivalent) masses of the single stages and, hence, their natural resonance frequencies.

Therefore, the choice of the masses and of the positions aimed at the change of the resonance frequencies of the single stages must be made in a contextual and global way, although this operation is technically simple and fully feasible. In the case of the above-mentioned prototype, the use and positioning of suitable calibration masses has allowed the reduction of the resonance frequencies of the system in the two degrees of freedom from 30 mHz to 10 mHz.

**Example of possible implementation of joints**

The joints referred to in this description can be flexible, since they must constitute a rotational constraint for the arms of the rods of the Watt's Linkage or, as a particular case, of the Folded Pendulum.

The choice of the typology of joint to be used depends on each application, but what must be guaranteed is the best possible definition of the center of rotation relative to the joint itself. Therefore, useful for this purpose is any mechanical system (joint) that is capable to guarantee that two rods connected at the ends (or in another convenient point) rotate around a defined point or in any case very well approximated (center of rotation). This constraint can, therefore, be for example a mechanical pin, a bearing (ball bearing, for example) or a circular or elliptical flexible joint, or of any other shape capable of guaranteeing a rotational constraint of two mechanical parts, regardless of whether the constraint operates in traction or in compression, a condition dictated and defined each time by the numerous and possible types of architectures that can be used for the implementation of the mechanisms described and object of this invention.

The key element, however, is the elasticity of the joint itself, which can be defined in the design phase of the Watt's Linkage/Folded Pendulum. These joints can be elastically native such as for example the elliptical and/or circular elastic joints, classically used in the monolithic implementations of one-dimensional Watt's Linkage/Folded Pendulum, or, for example, rotating ball bearings equipped with helical springs which make their dynamic behavior very similar to those of a classic monolithic circular or elliptical joint.

The design of the joints is in any case always aimed at achieving the requirements relating to the dimensions and elasticity defined in the design phase. Their design and implementation therefore require, from time to time, the choice of the material, the shape, the thickness, as well as the choice of the manufacturing technique (machining by precision numerical milling, by EDM by immersion, etc.). It is possible, as already shown in Figures 8 and 10, to implement joints operating in pairs or in any case in parallel (also, in general, more than two). The latter technical design choice has, in fact, the advantage of limiting the torsional effects of the joints themselves, minimizing the coupling between the longitudinal and transversal degrees of freedom.

**Advantages of the invention**

The invention as described above has, among other things, the following advantages:

- applicability of the Watt's Linkage mechanism to a system whose motion is multidimensional;
- applicability of the Watt's Linkage mechanism in the form of a multistage system mechanism whose motion is multidimensional;
- implementation of system whose compactness (dimensions of the whole system) are comparable to those of a single stage;
- decoupling or at least reduction of the effects produced by external mechanical forcing on mechanical systems, regardless of the application for which they were designed;
- implementation of inertial platforms and/or seismic isolation systems (seismic attenuators) for civil, industrial and scientific applications characterized by a wide band ($< 10^{-3}$ Hz - $10^2$ Hz) which allows them to operate effectively especially at low resonance frequency ($< 0.1$ Hz);
- implementation of innovative structures, such as for example buildings for civilian homes, characterized by high seismic isolation;
- cancellation or reduction of vibrations in structures such as ship cabins (cancellation of roll and pitch), mobile field hospitals, ambulances;
- reduction of the effects due to seismic forcing, which could cause structural resonance phenomena with consequent damage of the structures;
- implementation of two-dimensional and three-dimensional pendular multistage seismic broadband damping systems at low and very low frequency ($< 0.1$ Hz);
- use as a sensor for an absolute measurement of the motion of the surface to which a structure is anchored;
- "native" two-dimensional and/or three-dimensional sensors and isolators, also without using multiple stages.

In the foregoing, the preferred embodiments have been described and variants of the present invention have been suggested. It should be noted and understood that there can be improvements and modifications made of the present invention described above as long as they don't depart from the scope of the invention as set forth in the accompanying claims.

**Bibliography**

[1] F. Reuleaux: The Kinematics of Machinery, (MacMillan and Co., London) (1876).

[2] E.S. Ferguson: Kinematics of Mechanisms from the Time of Watt, United States National Museum Bulletin 228, 185230 (1962).

[3] F. Barone, G. Giordano: Low frequency folded pendulum with high mechanical quality factor, and seismic sensor utilizing such a folded pendulum, PCT WO 2011/004413 A3 (2011), Patent Numbers: IT 1394612 (Italy), EP 2452169 (Europe), JP 5409912 (Japan), RU 2518587 (Russia), AU 2010269796 (Australia), US 8,950,263 (USA), CA 2763204 (Canada).

[4] F. Barone, G. Giordano, F. Acernese: Low frequency folded pendulum with high mechanical quality factor in vertical configuration, and vertical seismic sensor utilizing such a folded pendulum, PCT WO 2012/147112 (2012), Patent Number: IT 1405600 (Italy), EP2643711 (Europe), AU 201247104 (Australia), JP 5981530 (Japan), RU 2589944 (Russia), US 9,256,000 (USA), CA 2825565 (Canada).

[5] F. Barone, G. Giordano, F. Acernese: Method for the measurement of angular and/or linear displacements utilizing one or more folded pendula, PCT WO 2016/020947 (2016), Patent Number: IT 1425605 (Italy), EP3177888 (Europe), JP6664378 (Japan), US 10,345,104 (USA), Canada pending.

[6] F. Barone, G. Giordano: Method for machining thin plates and elastic joints particularly for monolithic mechanical oscillators, PCT WO 2020/031008 (2019), Patent Number: IT201800007873.

[7] F. Barone, G. Giordano: Mechanical Accelerometers, J. Webster (ed.), Wiley Encyclopedia of Electrical and Electronics Engineering, doi: 10.1002/047134608X.W8280 (John Wiley & Sons, Inc.) (2015).

[8] F. Barone, G. Giordano: The UNISA Folded Pendulum: A very versatile class of low frequency high-sensitive sensors, Measurement, doi: 10.1016/j.measurement.2017.09.001 (2017).

[9] F. Barone, G. Giordano: A new typology of DC tiltmeter based on the Watt's linkage architecture, Sensors and Actuators A 281, 264277, doi: 10.1016/j.sna.2018.08.015 (2018).

[10] Y.L. Xu, J.M. Ko, W.S. Zhang: Vibration studies of Tsing Ma suspension bridge, J. Bridge Eng. 14, 149-156 (1997).

[11] K.C. Chen, J.H. Wang, B.S. Huang, C.C. Liu, W.G. Huang: Vibrations of the TAIPEI 101 skyscraper caused by the 2011 Tohoku earthquake, Japan, Earth Planets Space 64, 1277-1286, http://dx.doi.org/10.5047/eps.2012.04.004 (2012).

[12] J.F. Liu, L. Ju, D.G. Blair: Vibration isolation performance of an ultra-low frequency folded pendulum resonator, Phys. Lett. A 228, 243-249, http://dx.doi.org/10.1016/50375-9601(97)00105-9 (1997).

[13] J.F. Liu, D.G. Blair, L. Ju: Near-shore ocean wave measurement using a very low frequency folded pendulum, Meas. Sci. Technol. 9, 1772-1776 (1998).

[14] F. Barone, G. Giordano, F. Acernese, R. Romano: Tunable mechanical monolithic sensors for large band low frequency monitoring and characterization of sites and structures, Proceedings of SPIE 9986, SPIE, Bellingham, 99860C, ISBN: 9781510603769, http://dx.doi.org/10.1117/12.2242080 (2016).

[15] R.P. Middlemiss, A. Samarelli, D.J. Paul, J. Hough, S. Rowan, G.D. Hammond: Measurement of the Earth tides with a MEMS gravimeter, Nature 531, 614-617, https://doi.org/10.1038/nature17397 (2016).

[16] T. Accadia et al.: The seismic Superattenuators of the Virgo gravitational waves interferometer, Journal of low frequency noise, vibration and active control, 30, 1, 63-79, https://journals.sagepub.com/doi/pdf/10.1260/0263-0923.30.1.63 (2011).

[17] S. Braccini et al.: Measurement of the seismic attenuation performance of the VIRGO Superattenuator, Astroparticle Physics 23, 557-565, https://doi.org/10.1016/j.astropartphys.2005.04.002 (2005).

[18] F. Acernese et al.: Measurements of Superattenuator seismic isolation by Virgo interferometer, Astroparticle Physics 33, 3, 182-189, https://doi.org/10.1016/j.astropartphys.2010.01.006 (2010).

[19] J. Bryant, C.J. Sangwin, How Round Is Your Circle? Where Engineering and Mathematics Meet, Princeton University Press, 58-59, ISBN:978-0-691- 13118-4 (2008).

[20] A. Takamori, A. Bertolini, R. DeSalvo, A. Araya, T. Kanazawa, M. Shinohara: Novel compact tiltmeter for ocean bottom and other frontier observations, Meas. Sci. Technol. 22, 1115901, http://dx.doi.org/10.1088/0957-0233/22/11/115901 (2011).

[21] M.Y. Tseytlin: Notch flexure hinges: an effective theory, Rev. Sci. Instrum. 73, 3363, https://doi.org/10.1063/1.1499761 (2002).

[22] F. Travasso, F. Barone, G. Giordano, F. Marchesoni, H. Vocca: Low temperature performances of a monolithic folded pendulum sensor for the third generation of interferometric detectors of gravitational waves, The international GRAvitational-wave Science & technology Symposium (GRASS 2018), 1-2 March 2018, Padova (Italy) (2018). https://agenda.infn.it/event/14869/contributions/26928/ (2018).

## Claims

1. A multidimensional mechanical Watt's Linkage, VLM, comprising a number $N$ of one-dimensional Watt's Linkages, with $N = 2, 3$, wherein the $i$-th one-dimensional Watt's Linkage, with $i = 1, .., N$, is constrained to move on a respective $i$-th plane of a three-dimensional spatial reference system, and comprises:

   - an $i$-th support ($\overline{A_1D_1}$, $\overline{A_2D_2}$, $\overline{A_3D_3}$);
   - an $i$-th central arm ($\overline{B_1C_1}$, $\overline{B_2C_2}$, $\overline{B_3C_3}$);
   - an $i$-th first arm ($\overline{A_1B_1}$, $\overline{A_2B_2}$, $\overline{A_3B_3}$);
   - an $i$-th second arm ($\overline{D_1C_1}$, $\overline{D_2C_2}$, $\overline{D_3C_3}$);

   the $i$-th first arm and the $i$-th second arm being connected at one of their ends to the i-th central arm through corresponding $i$-th central joining systems ($B_1,B_2,B_3$; $C_1,C_2,C_3$) and at their other end to the i-th support through corresponding $i$-th end joining systems ($A_1,A_2,A_3$; $D_1,D_2,D_3$), the corresponding central and end joining systems having rotation axes reciprocally parallel and perpendicular to said $i$-th plane, the $i$-th central arm not being fixed in any point to the $i$-th support and thus being free to move relative thereto, and wherein the support of the $i$-th one-dimensional Watt's Linkage with $i$=1 is fixed in the three-dimensional spatial reference system; the multidimensional mechanical Watt's Linkage, VLM, being **characterized in that:**

- the $i$-th central arm ($\overline{B_1C_1}$, $\overline{B_2C_2}$) is rigidly connected in at least one point to the $i$+1-th support ($\overline{A_2D_2}$, $\overline{A_3D_3}$), for $i$ = 1, ..., $N$-1;
- for $i$ = 2, ..., $N,$ the $i$-th support ($\overline{A_2D_2}$, $\overline{A_3D_3}$) is movable in the three-dimensional spatial reference system;
- the i-th plane is chosen so that it is not obtainable from a linear combination of the remaining $N$-1 respective planes of the $N$ one-dimensional Watt's Linkages.

2. A multidimensional mechanical Watt's Linkage according to claim 1, wherein for each $i$-th one-dimensional Watt's Linkage there are $M_i$ ($M_i \geq 0$) further one-dimensional Watt's Linkages, the further $m_i$-th Watt's Linkage, *with* $m_i$ = 1, ..., $M_i$, comprising, with its respective further $m_i$-th central joints and its further $m_i$-th end joints, a further $m_i$-th support, with $m_i$= 1, .., $M_i$, a further $m_i$-th central arm, a further $m_i$-th first arm, and a further $m_i$-th second arm, rigidly connected to said $i$-th support, $i$-th central arm, $i$-th first arm, and $i$-th second arm, respectively.

3. A multidimensional mechanical Watt's Linkage according to claim 2, wherein $M_i$ = 1.

4. A multidimensional mechanical Watt's Linkage according to claim 2 or 3, wherein said further $m_i$-th central and end joining systems are separated from said i-th central and end joining systems.

5. A multidimensional mechanical Watt's Linkage according to claim 2 or 3, wherein said further $m_i$-th central and end joining systems are coincident with the i-th central and end joining systems of the corresponding $i$-th Watt's Linkages, providing unique $i$-th central and end joining systems extending transversely to the respective oscillation planes of the $i$-th one-dimensional Watt's Linkage.

6. A multidimensional mechanical Watt's Linkage according to one or more of claims from 1 to 5, wherein the $i$-th central arm ($\overline{B_1C_1}$, $\overline{B_2C_2}$, $\overline{B_3C_3}$) is rigidly connected in at least two points to the $i$+1-th support ($\overline{A_2D_2}$, $\overline{A_3D_3}$), for $i$ = 1, .., $N$-1.

7. A multidimensional mechanical Watt's Linkage according to claim 6, wherein said two points are symmetric relative to the geometric center ($E_1$, $E_2$, $E_3$) of the $i$-th central arm.

8. A multidimensional mechanical Watt's Linkage according to claim 6 or 7, wherein said $i$-th central arm is a rigid central assembly having a first and a second end connected to the corresponding $i$-th central joining systems ($B_1$, $B_2$, $B_3$; $C_1$, $C_2$, $C_3$), and in which said two points are positioned along the geometric line which includes said first and said second ends.

9. A multidimensional mechanical's Watt's Linkage according to one or more of claims 1 to 8, wherein a platform (P) connected to at least one point of the $N$-th central arm ($\overline{B_1C_1}$, $\overline{B_2C_2}$, $\overline{B_3C_3}$) and/or at least one of the further $m_N$-th central arms is further comprised.

10. A multidimensional mechanical Watt's Linkage according to claim 9, wherein said two points are symmetric relative to the geometric center ($E_1$, $E_2$, $E_3$) of said i-th central arm and/or of said at least one further $m_N$-th central arms.

11. A multidimensional folded pendulum constituted by a multidimensional mechanical Watt's Linkage according to any one of the preceding claims, wherein, in the resting position, said $i$-th central arm ($\overline{B_1C_1}$, $\overline{B_2C_2}$, $\overline{B_3C_3}$) is perpendicular to both the $i$-th first arm ($\overline{A_1B_1}$, $\overline{A_2B_2}$, $\overline{A_3B_3}$) and the $i$-th second arm ($\overline{D_1C_1}$, $\overline{D_2C_2}$, $\overline{D_3C_3}$) and said $m_i$-th central arm ($\overline{B_1C_1}$, $\overline{B_2C_2}$, $\overline{B_3C_3}$) are perpendicular to both the $m_i$-th first arm ($\overline{A_1B_1}$, $\overline{A_2B_2}$, $\overline{A_3B_3}$) and the $m_i$-th second arm ($\overline{D_1C_1}$, $\overline{D_2C_2}$, $\overline{D_3C_3}$).

12. A multidimensional folded pendulum according to claim 11, wherein the multidimensional folded pendulum is made of a monolithic block of appropriate machined material.

**13.** A multidimensional folded pendulum according to any one of claims 11 or 12, **characterized in that** each of said joining systems comprises two joints.

**14.** A multidimensional folded pendulum according to any one of the claims from 11 to 13, **characterized in that** said joining systems comprise non-circular elliptical joints.

**15.** A multidimensional folded pendulum according to claim 14, **characterized in that** said joining systems comprise two joints traced by removal of two ellipses having eccentricity $\Sigma > 3.2$ and having reciprocal distance d > 10 microns.

**16.** A multidimensional folded pendulum according to one or more of claims 11 to 15, wherein each joining system ($A_1$, $A_2, A_3; B_1, B_2, B_3$) relative to the $i$-th first arm and/or to the further $m_i$-th first arm comprises one or more joints in traction.

**17.** A multidimensional folded pendulum according to one or more of claims 11 to 16, wherein each joining system ($A_1$, $A_2, A_3; B_1, B_2, B_3$) relative to the $i$-th second arm and/or the further $m_i$-th second arm comprises one or more joints in compression.

**18.** A seismic sensor, comprising:

- a multidimensional mechanical Watt's Linkage or a multidimensional folded pendulum, comprising a plurality of one-dimensional mechanical Watt's Linkages or multidimensional folded pendulums, respectively, each having a respective test mass and a respective support ($\overline{A_1D_1}$, $\overline{A_2B_2}$, $\overline{A_3D_3}$),
- respective systems for detecting the apparent displacement of the respective test mass relative to the respective support ($\overline{A_1D_1}$, $\overline{A_2D_2}$, $\overline{A_3D_3}$),

and **characterized in that** the multidimensional mechanical Watt's Linkage or the multidimensional folded pendulum is the multidimensional mechanical Watt's Linkage according to one or more of claims 1 to 10 or the multidimensional folded pendulum according to one or more of claims 11 to 17, wherein the respective test mass is the mass of the respective central arm or of the respective central arm and of said platform ($P$).

**Patentansprüche**

**1.** Mehrdimensionales mechanische Wattgestänge, VLM, umfassend eine Anzahl von $N$ eindimensionalen Wattgestängen mit $N = 2,3$, wobei das $i$-te eindimensionale Wattgestänge mit $i = 1,.., N$ so eingeschränkt ist, dass es sich auf einer jeweiligen $i$-ten Ebene eines dreidimensionalen räumlichen Bezugssystems bewegt, und das umfasst:

- eine $i$-te Stütze ($\overline{A_1D_1}$, $\overline{A_2D_2}$, $\overline{A_3D_3}$);
- einen $i$-ten Mittelarm ($\overline{B_1C_1}$, $\overline{B_2C_2}$, $\overline{B_3C_3}$);
- einen $i$-ten ersten Arm ($\overline{A_1B_1}$, $\overline{A_2B_2}$, $\overline{A_3B_3}$);
- einen $i$-ten zweiten Arm ($\overline{D_1C_1}$, $\overline{D_2C_2}$, $\overline{D_3C_3}$);
wobei der $i$-te erste Arm und der $i$-te zweite Arm an einem ihrer Enden mit dem $i$-ten Mittelarm über entsprechende $i$-te Mittelverbindungssysteme ($B_1,B_2, B_3; C_1, C_2, C_3$) und an ihrem anderen Ende mit der $i$-ten Stütze über entsprechende $i$-te Endverbindungssysteme ($A_1, A_2, A_3; D_1, D_2, D_3$) verbunden sind, wobei die entsprechenden Mittel- und Endverbindungssysteme Drehachsen parallel und senkrecht zu der $i$-ten Ebene aufweisen, wobei der $i$-te Mittelarm an keinem Punkt an der $i$-ten Stütze befestigt ist und sich somit relativ zu dieser frei bewegt und wobei die Stütze des $i$-ten eindimensionalen Wattgestänges mit $i = 1$ in dem dreidimensionalen räumlichen Bezugssystem befestigt ist;
wobei das mehrdimensionale mechanische Wattgestänge, VLM, **dadurch gekennzeichnet ist, dass:**

- der i-te Mittelarm ($\overline{B_1C_1}$, $\overline{B_2C_2}$) an mindestens einem Punkt starr mit der $i$+1-ten Stütze ($\overline{A_2D_2}$, $\overline{A_3D_3}$) bei $i = 1, ..., N$-1 verbunden ist;
- bei $i = 2..., N$ die i-te Stütze ($\overline{A_2D_2}$, $\overline{A_3D_3}$) in dem dreidimensionalen räumlichen Bezugssystem beweglich ist;
- die $i$-te Ebene so gewählt ist, dass sie nicht aus einer linearen Kombination der verbleibenden $N$-1 jeweiligen Ebenen der $N$ eindimensionalen Wattgestänge erhältlich ist.

**2.** Mehrdimensionales mechanisches Wattgestänge nach Anspruch 1,

wobei für jedes $i$-te eindimensionale Wattgestänge $M_i$ ($M_i \geq 0$) weitere eindimensionale Wattgestänge existieren, wobei das weitere $m_i$-te Wattgestänge *bei $m_i$ = 1, ..., $M_i$* mit seinen jeweiligen weiteren $m_i$-ten Mittelverbindungen und seinen weiteren $m_i$-ten Endverbindungen eine weitere $m_i$-te Stütze, bei $m_i$ = 1, .., $M_i$ einen weiteren $m_i$-ten Mittelarm, einen weiteren $m_i$-ten ersten Arm und einen weiteren $m_i$-ten zweiten Arm umfasst, die starr mit der $i$-ten Stütze, dem $i$-ten Mittelarm, dem $i$-ten ersten Arm bzw. dem $i$-ten zweiten Arm verbunden sind.

3. Mehrdimensionales mechanisches Wattgestänge nach Anspruch 2, wobei $M_i$ = 1.

4. Mehrdimensionales mechanisches Wattgestänge nach Anspruch 2 oder 3, wobei die weiteren $m_i$-ten Mittel- und Endverbindungssysteme von den $i$-ten Mittel- und Endverbindungssystemen getrennt sind.

5. Mehrdimensionales mechanisches Wattgestänge nach Anspruch 2 oder 3, wobei die weiteren $m_i$-ten Mittel- und Endverbindungssysteme mit den $i$-ten Mittel- und Endverbindungssystemen der entsprechenden $i$-ten Wattgestänge zusammenfallen, wodurch einzigartige $i$-te Mittel- und Endverbindungssysteme bereitgestellt werden, die sich quer zu den jeweiligen Schwingungsebenen der $i$-ten eindimensionalen Wattgestänge erstrecken.

6. Mehrdimensionales mechanisches Wattgestänge nach einem oder mehreren der Ansprüche 1 bis 5, wobei der $i$-te Mittelarm ($\overline{B_1C_1}$, $\overline{B_2C_2}$, $\overline{B_3C_3}$) bei $i$ = 1, .., $N$-1 an mindestens zwei Punkten starr mit der $i$+1-ten Stütze ($\overline{A_2D_2}$, $\overline{A_3D_3}$) verbunden ist.

7. Mehrdimensionales mechanisches Wattgestänge nach Anspruch 6, wobei die beiden Punkte relativ zum geometrischen Mittelpunkt ($E_1$, $E_2$, $E_3$) des $i$-ten Mittelarms bogensymmetrisch sind.

8. Mehrdimensionales mechanisches Wattgestänge nach Anspruch 6 oder 7, wobei der $i$-te Mittelarm eine starre Mittelanordnung ist, die ein erste sind ein zweites Ende aufweist, die mit den entsprechenden i-ten Mittelverbindungssystemen ($B_1$, $B_2$, $B_3$; $C_1$, $C_2$, $C_3$) verbunden sind und bei der die beiden Punkte entlang der geometrischen Linie positioniert sind, die das erste und das zweite Ende einschließt.

9. Mehrdimensionales mechanisches Wattgestänge nach einem oder mehreren der Ansprüche 1 bis 8, wobei eine Plattform (P), die mit mindestens einem Punkt des $N$-ten Mittelarms ($\overline{B_1C_1}$, $\overline{B_2C_2}$, $\overline{B_3C_3}$) und/oder mindestens einem der weiteren $m_N$-ten mittelarme verbunden ist, ferner enthalten ist.

10. Mehrdimensionales mechanisches Wattgestänge nach Anspruch 9, wobei die beiden Punkte symmetrisch relativ zum geometrischen Mittelpunkt ($E_1$, $E_2$, $E_3$) des $i$-ten Mittelarms und/oder der mindestens einen weiteren $m_N$-ten Mittelarme sind.

11. Mehrdimensionales gefaltetes Pendel, das aus einem mehrdimensionalen mechanischen Wattgestänge nach einem der vorhergehenden Ansprüche besteht, wobei in der Ruheposition der $i$-te Mittelarm ($\overline{B_1C_1}$, $\overline{B_2C_2}$, $\overline{B_3C_3}$) sowohl zu dem $i$-ten ersten Arm ($\overline{A_1B_1}$, $\overline{A_2B_2}$, $\overline{A_3B_3}$) als auch dem $i$-ten zweiten Arm ($\overline{D_1C_1}$, $\overline{D_2C_2}$, $\overline{D_3C_3}$) senkrecht sind und der $m_i$-te Mittelarm ($\overline{B_1C_1}$, $\overline{B_2C_2}$, $\overline{B_3C_3}$) sowohl zu dem $m_i$-ten ersten Arm ($\overline{A_1B_1}$, $\overline{A_2B_2}$, $\overline{A_3B_3}$) als auch dem $m_i$-ten zweiten Arm ($\overline{D_1C_1}$, $\overline{D_2C_2}$, $\overline{D_3C_3}$) senkrecht ist.

12. Mehrdimensionales gefaltetes Pendel nach Anspruch 11, wobei das mehrdimensionale gefaltete Pendel aus einem monolithischen Block aus geeignetem bearbeiteten Material besteht.

13. Mehrdimensionales gefaltetes Pendel nach einem der Ansprüche 11 oder 12, **dadurch gekennzeichnet, dass** jedes der Verbindungssysteme zwei Verbindungen umfasst.

14. Mehrdimensionales gefaltetes Pendel nach einem der Ansprüche 11 bis 13, **dadurch gekennzeichnet, dass** die Verbindungssysteme nichtkreisförmige elliptische Verbindungen umfassen.

15. Mehrdimensionales gefaltetes Pendel nach Anspruch 14, **dadurch gekennzeichnet, dass** die Verbindungssysteme zwei Verbindungen umfassen, die durch Entfernen zweier Ellipsen verfolgt werden, die eine Exzentrizität $\Sigma$ > 3.2 und einen reziproken Abstand d > 10 Mikrometer aufweisen.

16. Mehrdimensionales gefaltetes Pendel nach einem oder mehreren der Ansprüche 11 bis 15, wobei jedes Verbin-

dungssystem ($A_1$, $A_2$, $A_3$; $B_1$, $B_2$, $B_3$) relativ zu dem $i$-ten ersten Arm und/oder zu dem weiteren $m_i$-ten ersten Arm ein oder mehrere Verbindungen in Traktion umfasst.

17. Mehrdimensionales gefaltetes Pendel nach einem oder mehreren der Ansprüche 11 bis 16, wobei jedes Verbindungssystem ($A_1$, $A_2$, $A_3$; $B_1$, $B_2$, $B_3$) relativ zu dem $i$-ten zweiten Arm und/oder dem weiteren $m_i$-ten zweiten Arm ein oder mehrere Verbindungen in Kompression umfasst.

18. Seismischer Sensor, umfassend:

- ein mehrdimensionales mechanisches Wattgestänge oder ein mehrdimensionales gefaltetes Pendel, das eine Vielzahl von eindimensionalen mechanischen Wattgestängen bzw. mehrdimensionalen gefalteten Pendeln umfasst, die jeweils eine entsprechende Prüfmasse und eine entsprechende Stütze ($\overline{A_1D_1}$, $\overline{A_2D_2}$, $\overline{A_3D_3}$) aufweisen,
- jeweilige Systeme zum Erkennen der scheinbaren Verschiebung der jeweiligen Prüfmasse zu der jeweiligen Stütze ($\overline{A_1D_1}$, $\overline{A_2D_2}$, $\overline{A_3D_3}$,),

und **dadurch gekennzeichnet, dass** das mehrdimensionale mechanische Wattgestänge oder das mehrdimensionale gefaltete Pendel das mehrdimensionale mechanische Wattgestänge nach einem oder mehreren der Ansprüche 1 bis 10 oder das mehrdimensionale gefaltete Pendel nach einem oder mehreren der Ansprüche 11 bis 17 ist, wobei die jeweilige Prüfmasse die Masse des jeweiligen Mittelarms oder des jeweiligen Mittelarms der Plattform ($P$) ist.

## Revendications

1. Mécanisme de Watt mécanique multidimensionnel, VLM, comprenant un nombre $N$ de liaisons de Watt unidimensionnelles, avec $N$ = 2,3, dans lequel la $i$ème liaison de Watt unidimensionnelle, avec $i$ = 1, .., $N$, est contrainte à se déplacer sur un $i$ème plan respectif d'un système de référence spatiale tridimensionnelle, et comprend :

- un $i$ème support ($\overline{A_1D_1}$, $\overline{A_2D_2}$, $\overline{A_3D_3}$) ;
- un $i$ème bras central ($\overline{B_1C_1}$, $\overline{B_2C_2}$, $\overline{B_3C_3}$) ;
- un $i$ème premier bras ($\overline{A_1B_1}$, $\overline{A_2B_2}$, $\overline{A_3B_3}$) ;
- un $i$ème second bras ($\overline{D_1C_1}$, $\overline{D_3C_3}$) ;

le $i$ème premier bras et le $i$ème second bras étant reliés à l'une de leurs extrémités au $i$ème bras central par l'intermédiaire *des i*èmes systèmes de jonction centraux ($B_1$,$B_2$,$B_3$ ; $C_1$,$C_2$,$C_3$) correspondants et à leur autre extrémité au $i$ème support par l'intermédiaire *des* ièmes systèmes de jonction d'extrémité ($A_1$,$A_2$,$A_3$ ; $D_1$,$D_2$,$D_3$) correspondants, les systèmes de jonction centraux et d'extrémité correspondants ayant des axes de rotation réciproquement parallèles et perpendiculaires audit $i$ème plan, le $i$ème bras central n'étant fixé en aucun point au $i$ème support et étant ainsi libre de se déplacer par rapport à celui-ci, et dans lequel le support de la $i$ème liaison de Watt unidimensionnelle avec $i$ = 1 est fixe dans le système de référence spatiale tridimensionnelle ; le mécanisme de Watt mécanique multidimensionnel, VLM, étant **caractérisé en ce que** :

- le $i$ème bras central ($\overline{B_1C_1}$, $\overline{B_2C_2}$) est relié rigidement en au moins un point au $i$+1ème support ($\overline{A_2D_2}$, $\overline{A_3D_3}$), pour $i$ = 1, ..., $N$-1 ;
- pour $i$ = 2..., $N$, le $i$ème support ($\overline{A_2D_2}$, $\overline{A_3D_3}$) est mobile dans le système de référence spatiale tridimensionnelle ;
- le $i$ème plan est choisi de sorte qu'il ne puisse pas être obtenu à partir d'une combinaison linéaire des $N$-1 plans respectifs restants des $N$ liaisons de Watt unidimensionnelles.

2. Mécanisme de Watt mécanique multidimensionnel selon la revendication 1, dans lequel pour chaque $i$ème liaison de Watt unidimensionnelle il y a $M_i$ ($M_i \geq 0$) autres liaisons de Watt unidimensionnelles, la $m_i$ème liaison de Watt supplémentaire, *avec $m_i$ = 1, ..., $M_i$*, comprenant, avec ses $m_i$èmes articulations centrales supplémentaires respectives et ses $m_i$èmes articulations d'extrémité supplémentaires, un $m_i$ème support supplémentaire, avec $m_i$ = 1, .., $M_i$, un autre $m_i$ème bras central, un *autre m_i*ème premier bras, et un autre $m_i$ème second bras, reliés rigidement audit $i$ème support, $i$ème bras central, $i$ème premier bras et $i$ème second bras, respectivement.

**3.** Mécanisme de Watt mécanique multidimensionnel selon la revendication 2, dans lequel $M_i = 1$.

**4.** Mécanisme de Watt mécanique multidimensionnel selon la revendication 2 ou 3, dans lequel lesdits $m_i$èmes systèmes de jonction centraux et d'extrémité supplémentaires sont séparés desdits ièmes systèmes de jonction centraux et d'extrémité.

**5.** Mécanisme de Watt mécanique multidimensionnel selon la revendication 2 ou 3, dans lequel lesdits $m_i$èmes systèmes de jonction centraux et d'extrémité supplémentaires coïncident avec les ièmes systèmes de jonction centraux et d'extrémité des ièmes liaisons de Watt correspondantes, fournissant un ième unique des systèmes de jonction centraux et d'extrémité s'étendant transversalement aux plans d'oscillation respectifs de la ième liaison de Watt unidimensionnelle.

**6.** Mécanisme de Watt mécanique multidimensionnel selon une ou plusieurs des revendications 1 à 5, dans lequel le ième bras central ($\overline{B_1C_1}$, $\overline{B_2C_2}$, $\overline{B_3C_3}$), est relié rigidement en au moins deux points au i+1ème support ($\overline{A_2D_2}$, $\overline{A_3D_3}$), pour $i = 1,..,\ N\text{-}1$.

**7.** Mécanisme de Watt mécanique multidimensionnel selon la revendication 6, dans lequel lesdits deux points sont symétriques par rapport au centre géométrique ($E_1$, $E_2$, $E_3$) du ième bras central.

**8.** Mécanisme de Watt mécanique multidimensionnel selon la revendication 6 ou 7, dans lequel ledit ième bras central est un ensemble central rigide ayant une première et une seconde extrémité reliées aux ièmes systèmes de jonction centraux ($B_1$, $B_2$, $B_3$ ; $C_1$, $C_2$, $C_3$) correspondants, et dans lequel lesdits deux points sont positionnés le long de la ligne géométrique qui comprend ladite première et ladite seconde extrémités.

**9.** Mécanisme de Watt mécanique multidimensionnel selon une ou plusieurs des revendications 1 à 8, dans lequel une plate-forme (P) reliée à au moins un point du Nième bras central ($\overline{B_1C_1}$, $\overline{B_2C_2}$, $\overline{B_3C_3}$) et/ou au moins l'un des $m_N$ième bras centraux supplémentaires est en outre comprise.

**10.** Mécanisme de Watt mécanique multidimensionnel selon la revendication 9, dans lequel lesdits deux points sont symétriques par rapport au centre géométrique ($E_1$, $E_2$, $E_3$) dudit ième bras central et/ou dudit au moins un autre $m_N$ième bras central.

**11.** Pendule plié multidimensionnel constitué d'un mécanisme de Watt mécanique multidimensionnel selon l'une quelconque des revendications précédentes, dans lequel, en position de repos, ledit ième bras central ($\overline{B_1C_1}$, $\overline{B_2C_2}$, $\overline{B_3C_3}$) est perpendiculaire à la fois au ième premier bras ($\overline{A_1B_1}$, $\overline{A_2B_2}$, $\overline{A_3B_3}$) et au ième second bras ($\overline{D_1C_1}$, $\overline{D_2C_2}$, $\overline{D_3C_3}$) et ledit $m_i$ème bras central ($\overline{B_1C_1}$, $\overline{B_2C_2}$, $\overline{B_3C_3}$,) sont perpendiculaires à la fois au $m_i$ème premier bras ($\overline{A_1B_1}$, $\overline{A_2B_2}$, $\overline{A_3B_3}$) et au $m_i$ème second bras ($\overline{D_1C_1}$, $\overline{D_2C_2}$, $\overline{D_3D_3}$).

**12.** Pendule plié multidimensionnel selon la revendication 11, dans lequel le pendule plié multidimensionnel est constitué d'un bloc monolithique de matériau usiné approprié.

**13.** Pendule plié multidimensionnel selon l'une quelconque des revendications 11 ou 12, **caractérisé en ce que** chacun desdits systèmes de jonction comprend deux articulations.

**14.** Pendule plié multidimensionnel selon l'une quelconque des revendications 11 à 13, **caractérisé en ce que** lesdits systèmes de jonction comprennent des articulations elliptiques non circulaires.

**15.** Pendule plié multidimensionnel selon la revendication 14, **caractérisé en ce que** lesdits systèmes de jonction comprennent deux articulations tracées par enlèvement de deux ellipses ayant une excentricité $\Sigma > 3,2$ et ayant une distance réciproque $d > 10$ microns.

**16.** Pendule plié multidimensionnel selon une ou plusieurs des revendications 11 à 15, dans lequel chaque système de jonction ($A_1, A_2, A_3$ ; $B_1, B_2, B_3$) par rapport au ième premier bras et/ou à l'autre $m_i$ème premier bras comporte une ou plusieurs articulations en traction.

**17.** Pendule plié multidimensionnel selon une ou plusieurs des revendications 11 à 16, dans lequel chaque système

de jonction ($A_1$, $A_2$, $A_3$ ; $B_1$, $B_2$, $B_3$) par rapport au ième second bras et/ou *à l'autre m* $_i$ème second bras comporte une ou plusieurs articulations en compression.

18. Capteur sismique, comprenant :

- un mécanisme de Watt mécanique multidimensionnel ou un pendule plié multidimensionnel, comprenant une pluralité de liaisons de Watt mécaniques unidimensionnelles ou de pendules pliés multidimensionnels, respectivement, chacun ayant une masse d'essai respective et un support respectif ($\overline{A_1D_1}$, $\overline{A_2D_2}$, $\overline{A_3D_3}$),
- des systèmes respectifs pour détecter le déplacement apparent de la masse d'essai respective par rapport au support respectif ($\overline{A_1D_1}$, $\overline{A_2D_2}$, $\overline{A_3D_3}$,),

et **caractérisé en ce que** le mécanisme de Watt mécanique multidimensionnel ou le pendule replié multidimensionnel est le mécanisme de Watt mécanique multidimensionnel selon une ou plusieurs des revendications 1 à 10 ou le pendule plié multidimensionnel selon une ou plusieurs des revendications 11 à 17, dans lequel la masse d'essai respective est la masse du bras central respectif ou du bras central respectif et de ladite plate-forme (*P*).

**FIG.1**

EP 4 098 983 B1

200

Straight line

Geometrical Center $E_1$

Long rod (1) (pendulum)

$A_1$

$B_1$

$C_1$

Short Rod (inertial Mass)

Long Rod (2) (inverted pendulum)

Joint

$D_1$

Base

x

z

Gravitational Acceleration

$g$

O

**FIG.2**

**FIG.3**

EP 4 098 983 B1

FIG.4

FIG.5

**FIG.6**

**FIG.7**

EP 4 098 983 B1

EP 4 098 983 B1

$$\vec{S}_{tE} \approx \vec{S}_{tEx} + \vec{S}_{tEy} = S_{tEx}\,\vec{\imath} + S_{tEy}\,\vec{\jmath}$$

800

**FIG.8**

FIG.9

**FIG.10**

**FIG.11**

**FIG.12**

EP 4 098 983 B1

**FIG.13**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2643711 B1
- WO 2011004413 A3, F. Barone, G. Giordano
- IT 1394612
- EP 2452169 A
- JP 5409912 B
- RU 2518587
- AU 2010269796
- US 8950263 B
- CA 2763204
- WO 2012147112 A, F. Barone, G. Giordano, F. Acernese
- IT 1405600
- EP 2643711 A
- AU 201247104
- JP 5981530 B
- RU 2589944
- US 9256000 B
- CA 2825565
- WO 2016020947 A, F. Barone, G. Giordano, F. Acernese
- IT 1425605
- EP 3177888 A
- JP 6664378 B
- US 10345104 B
- WO 2020031008 A, F. Barone, G. Giordano
- IT 201800007873

### Non-patent literature cited in the description

- **F. REULEAUX.** The Kinematics of Machinery. MacMillan and Co,
- Kinematics of Mechanisms from the Time of Watt. **E.S. FERGUSON.** United States National Museum Bulletin. 1962, vol. 228, 185230
- Mechanical Accelerometers. **F. BARONE ; G. GIORDANO.** Wiley Encyclopedia of Electrical and Electronics Engineering. John Wiley & Sons, Inc, 2015
- **F. BARONE ; G. GIORDANO.** The UNISA Folded Pendulum: A very versatile class of low frequency high-sensitive sensors. *Measurement,* 2017
- **F. BARONE ; G. GIORDANO.** A new typology of DC tiltmeter based on the Watt's linkage architecture. *Sensors and Actuators A,* 2018, vol. 281, 264277
- **Y.L. XU ; J.M. KO ; W.S. ZHANG.** Vibration studies of Tsing Ma suspension bridge. *J. Bridge Eng.,* 1997, vol. 14, 149-156
- **K.C. CHEN ; J.H. WANG ; B.S. HUANG ; C.C. LIU ; W.G. HUANG.** *Vibrations of the TAIPEI 101 skyscraper caused by the 2011 Tohoku earthquake, Japan, Earth Planets Space,* 2012, vol. 64, 1277-1286, http://dx.doi.org/10.5047/eps.2012.04.004
- **J.F. LIU ; L. JU ; D.G. BLAIR.** Vibration isolation performance of an ultra-low frequency folded pendulum resonator. *Phys. Lett. A,* 1997, vol. 228, 243-249, http://dx.doi.org/10.1016/50375-9601(97)00105-9
- **J.F. LIU ; D.G. BLAIR ; L. JU.** Near-shore ocean wave measurement using a very low frequency folded pendulum. *Meas. Sci. Technol.,* 1998, vol. 9, 1772-1776
- **F. BARONE ; G. GIORDANO ; F. ACERNESE ; R. ROMANO.** Tunable mechanical monolithic sensors for large band low frequency monitoring and characterization of sites and structures. *Proceedings of SPIE 9986, SPIE, Bellingham,* 2016, ISBN 9781510603769, 99860C, http://dx.doi.org/10.1117/12.2242080
- **R.P. MIDDLEMISS ; A. SAMARELLI ; D.J. PAUL ; J. HOUGH ; S. ROWAN ; G.D. HAMMOND.** Measurement of the Earth tides with a MEMS gravimeter. *Nature,* 2016, vol. 531, 614-617, https://doi.org/10.1038/nature17397
- **T. ACCADIA et al.** The seismic Superattenuators of the Virgo gravitational waves interferometer. *Journal of low frequency noise, vibration and active control,* 2011, vol. 30 (1), 63-79, https://journals.sagepub.com/doi/pdf/10.1260/0263-0923.30.1.63
- **S. BRACCINI et al.** Measurement of the seismic attenuation performance of the VIRGO Superattenuator. *Astroparticle Physics,* 2005, vol. 23, 557-565, https://doi.org/10.1016/j.astropartphys.2005.04.002
- **F. ACERNESE et al.** Measurements of Superattenuator seismic isolation by Virgo interferometer. *Astroparticle Physics,* 2010, vol. 33 (3), 182-189, https://doi.org/10.1016/j.astropartphys.2010.01.006

- How Round Is Your Circle?. **J. BRYANT ; C.J. SANGWIN.** Where Engineering and Mathematics Meet. Princeton University Press, 2008, 58-59
- **A. TAKAMORI ; A. BERTOLINI ; R. DESALVO ; A. ARAYA ; T. KANAZAWA ; M. SHINOHARA.** Novel compact tiltmeter for ocean bottom and other frontier observations. *Meas. Sci. Technol.,* 2011, vol. 22, 1115901, http://dx.doi.org/10.1088/0957-0233/22/11/115901
- **M.Y. TSEYTLIN.** Notch flexure hinges: an effective theory. *Rev. Sci. Instrum.,* 2002, vol. 73, 3363, https://doi.org/10.1063/1.1499761
- **F. TRAVASSO ; F. BARONE ; G. GIORDANO ; F. MARCHESONI ; H. VOCCA.** Low temperature performances of a monolithic folded pendulum sensor for the third generation of interferometric detectors of gravitational waves. *he international GRAvitational-wave Science & technology Symposium (GRASS 2018),* 01 March 2018, https://agenda.infn.it/event/14869/contributions/26928